# EUROPEAN PATENT APPLICATION

(11) **EP 4 383 925 A1**
(43) Date of publication of application: **12.06.2024**
(21) Application number: 21955424.3
(22) Date of filing: 31.08.2021
(51) Int. Cl.: H04W 76/14

(54) **COMMUNICATION METHOD AND APPARATUS**

(71) Applicant: Huawei Technologies Co., Ltd., Shenzhen, Guangdong 518129 (CN)
(72) Inventor: GAO, Lei, Shenzhen, Guangdong 518129 (CN); CHENG, Xingqing, Shenzhen, Guangdong 518129 (CN); WANG, Jian, Shenzhen, Guangdong 518129 (CN)
(74) Representative: Isarpatent
(86) International application number: PCT/CN2021/115762
(87) International publication number: WO 2023/028863

(57) **Abstract**

This application provides a communication method and apparatus, and relates to the field of wireless communication. A first node may send first configuration information on a first frequency hopping channel (S501), to configure a communication link between at least two second nodes. The communication link includes a direct link between the at least two second nodes, and the first node is a master node of at least one second node in the two second nodes corresponding to the direct link. In the foregoing method, the first node may configure the communication link between the at least two second nodes. Therefore, a conflict between a resource of the direct link and a resource of a master and slave communication link can be avoided, thereby improving communication performance.

## Description

### TECHNICAL FIELD

This application relates to the field of wireless communication, and in particular, to a communication method and apparatus.

### BACKGROUND

With continuous development of global communication technologies, wireless communication technologies are widely used in people's daily life. For example, intelligent devices such as intelligent transportation devices, smart home devices, and robots all need support from the wireless communication technology. In a wireless communication scenario, a specific communication area or range may include a plurality of communication domains. The communication domain may include a plurality of communication nodes that have a communication connection relationship. One of the plurality of communication nodes is a master communication node (referred to as a master node below), and the other nodes are slave communication nodes (referred to as slave nodes below). The master node may configure a master and slave communication link between the master node and the slave node to implement communication between the master and slave nodes.

In a communication domain, the slave node may communicate with another slave node in the communication domain in addition to the master node. Before the slave node communicates with the another slave node, the slave node may configure a direct link between the slave node and the another slave node, so as to implement communication between the slave nodes. Therefore, a conflict may occur between a resource of the direct link and a resource of the master and slave communication link. For example, a same resource needs to be used for both the direct link and the master and slave communication link at a same moment. For another example, a slave node needs to communicate with both the master node and another slave node at a same moment. If the resource of the direct link conflicts with the resource of the master and slave communication link, communication fails, and communication performance deteriorates.

### SUMMARY

Embodiments of this application provide a communication method and apparatus, to avoid a conflict between a resource of a direct link and a resource of a master and slave communication link, thereby improving communication performance.

To achieve the foregoing objectives, the following technical solutions are used in embodiments of this application.

According to a first aspect, a communication method is provided. The method is described by using an example in which an execution body is a first node. The method includes: sending first configuration information on a first frequency hopping channel, where the first configuration information is used to configure a communication link between at least two second nodes, the communication link includes a direct link between the at least two second nodes, and the first node is a master node of at least one second node in the two second nodes corresponding to the direct link.

According to the method provided in the foregoing first method, the first node, as the master node of the at least one second node, may communicate on the first frequency hopping channel by using a master and slave communication link, and configure the direct link between the at least two second nodes, so that direct communication can be performed between the at least two second nodes based on a configuration of the first node. This avoids a conflict between a resource of the direct link and a resource of the master and slave communication link, and improves communication performance. In addition, in the foregoing method, all resources in a communication domain are managed and maintained by the master node, and the slave node does not need to configure the resource of the direct link, so that complexity of the slave node and power consumption of the slave node can be reduced.

In a possible implementation, the method further includes: generating or obtaining the first configuration information. According to the foregoing method, the first node may generate or obtain the first configuration information, so that the at least two second nodes can communicate with each other based on the first configuration information.

In a possible implementation, the first node is a master node of the two second nodes corresponding to the direct link. According to the foregoing method, the first node may configure a direct link for two slave nodes of the first node, and the slave node does not need to configure a resource of the direct link. This can reduce complexity of the slave node and power consumption of the slave node.

In a possible implementation, the communication link includes a first communication link or a first communication link group; and the first configuration information includes one or more of the following: an identifier of the first communication link; an identifier of the first communication link group; a node identifier; type information of the first communication link; type information of a communication link in the first communication link group; first time domain resource information; or frequency hopping channel indication information. The first communication link is a communication link between two second nodes in the at least two second nodes, the first communication link group includes a plurality of communication links between the at least two second nodes, the node identifier is used to identify at least one node in the at least two second nodes, the first time domain resource information indicates a time domain resource of the communication link, and the frequency hopping channel indication information indicates an available frequency hopping channel of the communication link. According to the foregoing method, the first node may configure one or more of the identifier of the first communication link, the identifier of the first communication link group, the node identifier, the type information of the first communication link, the type information of the communication link in the first communication link group, the first time domain resource information, or the frequency hopping channel indication information for a node in the at least two second nodes, so that the at least two second nodes can communicate with each other based on the foregoing information. The identifier of the first communication link or the identifier of the first communication link group may be used for link identification. For example, in subsequent communication, after receiving the message, the second node may determine, based on whether the message includes the identifier of the first communication link or the identifier of the first communication link group, whether the message is a message transmitted in the first communication link or the first communication link group. The identifier of the first communication link or the identifier of the first communication link group may also be used as a frequency hopping randomization seed of the first communication link or the first communication link group. The second node determines, based on the identifier of the first communication link or the identifier of the first communication link group, a frequency hopping channel for sending and/or receiving a message transmitted in the first communication link or the first communication link group.

In a possible implementation, the time domain resource of the communication link includes at least one transmission opportunity group, and the first time domain resource information includes one or more of the following: period information of the transmission opportunity group; first time length information; or information about a first start location. All of the at least one transmission opportunity group are continuous in time domain, the first time length information includes information indicating a time domain length of a first transmission opportunity group in the at least one transmission opportunity group, the information about the first start location includes information indicating a time domain start location of a second transmission opportunity group in the at least one transmission opportunity group, and the first transmission opportunity group is the same as or different from the second transmission opportunity group. According to the foregoing method, the first node may configure the at least one transmission opportunity group for the node in the at least two second nodes, so that the nodes in the at least two second nodes communicate with each other in the at least one transmission opportunity group.

In a possible implementation, the transmission opportunity group includes at least one transmission opportunity, the time domain resource of the communication link includes at least two transmission opportunities, and the first time domain resource information further includes one or more of the following: quantity information of the transmission opportunities; second time length information; or information about a second start location. The transmission opportunity is used by the second node to send at least one direct communication message and/or receive at least one direct communication message, and in different transmission opportunities, a same sequence of resources used by the second node to send the at least one direct communication message and/or receive the at least one direct communication message is configured; the quantity information of the transmission opportunities includes a quantity of transmission opportunities in a third transmission opportunity group in the at least one transmission opportunity group; and the second time length information includes a time domain length of a first transmission opportunity of the at least one transmission opportunity, the information about the second start location includes a time domain start location of sending or receiving a direct communication message in a second transmission opportunity of the at least one transmission opportunity, and the first transmission opportunity is the same as or different from the second transmission opportunity. According to the foregoing method, the first node may configure the at least one transmission opportunity for the node in the at least two second nodes, so that the nodes in the at least two second nodes communicate with each other in the at least one transmission opportunity.

In a possible implementation, the method further includes: sending a first message, where the first message indicates that a fourth transmission opportunity group is used for the communication link, and the fourth transmission opportunity group is included in the time domain resource of the communication link. According to the foregoing method, the first node may indicate, by using the first message, to the node of the at least two second nodes that the fourth transmission opportunity group may be used for the communication link. In this way, nodes in the at least two second nodes may communicate in the fourth transmission opportunity group. It may be understood that the first configuration information may be semi-static configuration information, and is used to configure a potentially available resource of the communication link. These potentially available resources may not all be used for the communication link. Therefore, the first node may send the first message to indicate whether the fourth transmission opportunity group in the configured potentially available resource of the communication link is available for the communication link. The first node may flexibly adjust a resource usage manner based on a change of a transmission and a communication requirement of the master and slave communication link and/or a direct link, so that the resource can be more dynamically allocated to different links.

In a possible implementation, the sending a first message includes: starting sending the first message at a time domain start location of the fourth transmission opportunity group, or sending the first message in a time domain resource that is before the fourth transmission opportunity group and that is adjacent to the fourth transmission opportunity group. According to the foregoing method, the first node may dynamically indicate whether the fourth transmission opportunity group can be used for the direct link by starting sending the first message at the time domain start location of the fourth transmission opportunity group, or sending the first message in a time domain resource that is before the fourth transmission opportunity group and that is adjacent to the fourth transmission opportunity group. Therefore, the first node may configure a manner of using the fourth transmission opportunity group based on a latest situation, so that the fourth transmission opportunity group may be more properly allocated to different links.

In a possible implementation, the method further includes: sending a first message, where the first message indicates that a third transmission opportunity is used for the communication link, and the third transmission opportunity is included in the time domain resource of the communication link. According to the foregoing method, the first node may indicate, by using the first message, to a node in the at least two second nodes that the third transmission opportunity may be used for the communication link. In this way, nodes in the at least two second nodes may communicate in the third transmission opportunity. It may be understood that the first configuration information may be semi-static configuration information, and is used to configure a potentially available resource of the communication link. These potentially available resources may not all be used for the communication link. Therefore, the first node may send the first message to indicate whether the third transmission opportunity in the configured potentially available resource of the communication link is available for the communication link. The first node may flexibly adjust a resource usage manner based on a change of a transmission and a communication requirement of the master and slave communication link and/or a direct link, so that the resource can be more dynamically allocated to different links.

In a possible implementation, the sending a first message includes: starting sending the first message at a time domain start location of the third transmission opportunity, or sending the first message in a time domain resource that is before the third transmission opportunity and that is adjacent to the third transmission opportunity. According to the foregoing method, the first node may dynamically indicate whether the third transmission opportunity can be used for the direct link by starting sending the first message at the time domain start location of the third transmission opportunity, or sending the first message in a time domain resource that is before the third transmission opportunity and that is adjacent to the third transmission opportunity. Therefore, the first node may configure a manner of using the third transmission opportunity based on a latest situation, so that the third transmission opportunity can be more properly allocated to different links.

In a possible implementation, the first message is further used to synchronize the at least two second nodes. According to the foregoing method, nodes in the at least two second nodes may be synchronized by using the first message. A sending time of the first message is close to a time at which the at least two second nodes send and/or receive a message in the fourth transmission opportunity group or the third transmission opportunity. Therefore, when the at least two second nodes send and/or receive a message in the fourth transmission opportunity group or the third transmission opportunity, a clock drift is small and a synchronization effect is good.

In a possible implementation, the method further includes: receiving communication link configuration request information, where the communication link configuration request information is used to request to configure the communication link. According to the foregoing method, the first node may configure the communication link between the at least two second nodes based on the communication link configuration request information.

In a possible implementation, the communication link configuration request information includes one or more of the following: link type information of the communication link, indication information of the at least two second nodes, period information of the communication link, delay requirement information of the communication link, traffic volume information of the communication link, or resource requirement information of the communication link. According to the foregoing method, the first node may properly configure a communication link between the at least two second nodes based on one or more of the link type information of the communication link, the indication information of the at least two second nodes, the period information of the communication link, the delay requirement information of the communication link, the traffic volume information of the communication link, or the resource requirement information of the communication link, and optionally, based on related information of master and slave link communication that is known by the first node, so as to make full use of resources and avoid a conflict.

In a possible implementation, the sending first configuration information on a first frequency hopping channel includes: sending the first configuration information to a first slave node on the first frequency hopping channel, where the first slave node is a node in the at least two second nodes, and the first configuration information is used to configure a communication link between the first slave node and a node other than the first slave node in the at least two second nodes. The method further includes: sending second configuration information to a second slave node on a second frequency hopping channel, where the second slave node is a second node that is in the at least two second nodes and that is different from the first slave node, and the second configuration information is used to configure a communication link between the second slave node and a node other than the second slave node in the at least two second nodes. According to the foregoing method, the first node may separately send the first configuration information and the second configuration information to the first slave node and the second slave node in a unicast manner, to separately configure the communication link between the at least two second nodes including the first slave node and the second slave node for the first slave node and the second slave node. The first frequency hopping channel for sending the first configuration information and the second frequency hopping channel for sending a second frequency hopping information may be a same frequency hopping channel or different frequency hopping channels. This is not limited in this application.

In a possible implementation, the sending first configuration information on a first frequency hopping channel includes: sending the first configuration information to a second node group on the first frequency hopping channel, where the second node group includes the at least two second nodes. According to the foregoing method, the first node may send the first configuration information to the at least two second nodes in a multicast manner. Before sending the first configuration information, the at least two second nodes first form the second node group, and optionally, establish a multicast link between the first node (the master node) and the second node group, and then send the first configuration information in the multicast link. A manner of forming the second node group and establishing the multicast link may be pre-configuration, or may be configured by the first node. This is not limited in this application.

In a possible implementation, the method further includes: sending third configuration information, where the third configuration information includes indication information of a third slave node and/or indication information of a first resource, the third slave node is a node in the at least two second nodes, the third slave node is a control node in the at least two second nodes, and the first resource is used to carry control information of the communication link from the control node. According to the foregoing method, the first node may configure the third slave node that has a specific direct link management or configuration function and a resource for sending corresponding management signaling (for example, the control information of the communication link), so that the third slave node may manage or configure a communication link between the at least two second nodes. The direct link is managed by the node that uses the direct link for communication, so that dependency of the slave node on the master node and the master and slave link can be reduced, and resource configuration flexibility and independence of the direct link can be improved. It may be understood that if the third slave node receives the third configuration information, the third slave node may send the control information on the first resource based on the third configuration information. If a node other than the third slave node in the at least two second nodes receives the third configuration information, the node may receive, on the first resource based on the third configuration information, the control information sent by the third slave node.

According to a second aspect, a communication method is provided. The method is described by using an example in which an execution body is a first slave node, the first slave node is a node in at least two second nodes, and the method includes: receiving first configuration information from a first node on a first frequency hopping channel, where the first configuration information is used to configure a communication link between the at least two second nodes, the at least two nodes include a target node, the communication link includes a direct link between the target node and at least one second node that is in the at least two second nodes and that is different from the target node, and the first node is a master node of the target node; and communicating, based on the first configuration information, with the at least one second node that is in the at least two second nodes and that is different from the target node.

According to the method provided in the second aspect, the first slave node (that is, the target node), as the slave node of the first node, may communicate on the first frequency hopping channel by using a master and slave communication link, to receive the first configuration information used by the first node to configure the direct link between the at least two second nodes, and communicate with a node other than the first slave node in the at least two second nodes based on the first configuration information. This avoids a conflict between a resource of the direct link and a resource of the master and slave communication link, and improves communication performance. In addition, in the foregoing method, all resources in a communication domain are managed and maintained by the master node, and the slave node does not need to configure the resource of the direct link, so that complexity of the slave node and power consumption of the slave node can be reduced.

In a possible implementation, the first node is a master node of the two second nodes corresponding to the direct link. According to the foregoing method, the first node may configure a direct link for two slave nodes of the first node, and the slave node does not need to configure a resource of the direct link. This can reduce complexity of the slave node and power consumption of the slave node.

In a possible implementation, the communication link includes a first communication link or a first communication link group; and the first configuration information includes one or more of the following: an identifier of the first communication link; an identifier of the first communication link group; a node identifier; type information of the first communication link; type information of a communication link in the first communication link group; first time domain resource information; or frequency hopping channel indication information. The first communication link is a communication link between two second nodes in the at least two second nodes, the first communication link group includes a plurality of communication links between the at least two second nodes, the node identifier is used to identify at least one node in the at least two second nodes, the first time domain resource information indicates a time domain resource of the communication link, and the frequency hopping channel indication information indicates an available frequency hopping channel of the communication link. According to the foregoing method, the nodes in the at least two second nodes communicate with each other based on one or more of the identifier of the first communication link, the identifier of the first communication link group, the node identifier, the type information of the first communication link, the type information of the communication link in the first communication link group, the first time domain resource information, or the frequency hopping channel indication information. The identifier of the first communication link or the identifier of the first communication link group may be used for link identification. For example, in subsequent communication, after receiving the message, the second node may determine, based on whether the message includes the identifier of the first communication link or the identifier of the first communication link group, whether the message is a message transmitted in the first communication link or the first communication link group. The identifier of the first communication link or the identifier of the first communication link group may also be used as a frequency hopping randomization seed of the first communication link or the first communication link group. The second node determines, based on the identifier of the first communication link or the identifier of the first communication link group, a frequency hopping channel for sending and/or receiving a message transmitted in the first communication link or the first communication link group.

In a possible implementation, the time domain resource of the communication link includes at least one transmission opportunity group, and the first time domain resource information includes one or more of the following: period information of the transmission opportunity group; first time length information; or information about a first start location. All of the at least one transmission opportunity group are continuous in time domain, the first time length information includes information indicating a time domain length of a first transmission opportunity group in the at least one transmission opportunity group, the information about the first start location includes information indicating a time domain start location of a second transmission opportunity group in the at least one transmission opportunity group, and the first transmission opportunity group is the same as or different from the second transmission opportunity group. According to the foregoing method, the nodes in the at least two second nodes may communicate with each other in the at least one transmission opportunity group.

In a possible implementation, the transmission opportunity group includes at least one transmission opportunity, the time domain resource of the communication link includes at least two transmission opportunities, and the first time domain resource information further includes one or more of the following: quantity information of the transmission opportunities; second time length information; or information about a second start location. The transmission opportunity is used by the second node to send at least one direct communication message and/or receive at least one direct communication message, and in different transmission opportunities, a same sequence of resources used by the second node to send the at least one direct communication message and/or receive the at least one direct communication message is configured; the quantity information of the transmission opportunities includes a quantity of transmission opportunities in a third transmission opportunity group in the at least one transmission opportunity group; and the second time length information includes a time domain length of a first transmission opportunity of the at least one transmission opportunity, the information about the second start location includes a time domain start location of sending or receiving a direct communication message in a second transmission opportunity of the at least one transmission opportunity, and the first transmission opportunity is the same as or different from the second transmission opportunity. According to the foregoing method, the nodes in the at least two second nodes may communicate in the at least one transmission opportunity.

In a possible implementation, the method further includes: receiving a first message, where the first message indicates that a fourth transmission opportunity group is used for the communication link, and the fourth transmission opportunity group is included in the time domain resource of the communication link. According to the foregoing method, it may be determined, by using the first message, that the fourth transmission opportunity group may be used for the communication link. In this way, nodes in the at least two second nodes may communicate in the fourth transmission opportunity group. It may be understood that the first configuration information may be semi-static configuration information, and is used to configure a potentially available resource of the communication link. These potentially available resources may not all be used for the communication link. Therefore, the first node may send the first message to indicate whether the fourth transmission opportunity group in the configured potentially available resource of the communication link is available for the communication link. The first node may flexibly adjust a resource usage manner based on a change of a transmission and a communication requirement of the master and slave communication link and/or a direct link, so that the resource can be more dynamically allocated to different links.

In a possible implementation, the receiving a first message includes: starting receiving the first message at a time domain start location of the fourth transmission opportunity group, or receiving the first message in a time domain resource that is before the fourth transmission opportunity group and that is adjacent to the fourth transmission opportunity group. According to the foregoing method, whether the fourth transmission opportunity group can be used for the direct link may be determined by starting receiving the first message at the time domain start location of the fourth transmission opportunity group, or by receiving the first message in a time domain resource that is before the fourth transmission opportunity group and that is adjacent to the fourth transmission opportunity group. Therefore, the first node may configure a manner of using the fourth transmission opportunity group based on a latest situation, so that the fourth transmission opportunity group may be more properly allocated to different links.

In a possible implementation, the method further includes: receiving a first message, where the first message indicates that a third transmission opportunity is used for the communication link, and the third transmission opportunity is included in the time domain resource of the communication link. According to the foregoing method, it may be determined, by using the first message, that the third transmission opportunity may be used for the communication link. In this way, nodes in the at least two second nodes may communicate in the third transmission opportunity. It may be understood that the first configuration information may be semi-static configuration information, and is used to configure a potentially available resource of the communication link. These potentially available resources may not all be used for the communication link. Therefore, the first node may send the first message to indicate whether the third transmission opportunity in the configured potentially available resource of the communication link is available for the communication link. The first node may flexibly adjust a resource usage manner based on a change of a transmission and a communication requirement of the master and slave communication link and/or a direct link, so that the resource can be more dynamically allocated to different links.

In a possible implementation, the receiving a first message includes: starting receiving the first message at a time domain start location of the third transmission opportunity, or receiving the first message in a time domain resource that is before the third transmission opportunity and that is adjacent to the third transmission opportunity. According to the foregoing method, whether the third transmission opportunity is available for the direct link may be determined by starting receiving the first message at the time domain start location of the third transmission opportunity, or by receiving the first message in a time domain resource that is before the third transmission opportunity and that is adjacent to the third transmission opportunity. Therefore, the first node may configure a manner of using the third transmission opportunity based on a latest situation, so that the third transmission opportunity may be more properly allocated to different links.

In a possible implementation, the method further includes: synchronizing with a node in the at least two second nodes based on the first message. According to the foregoing method, nodes in the at least two second nodes may be synchronized by using the first message. A sending time of the first message is close to a time at which the at least two second nodes send and/or receive a message in the fourth transmission opportunity group or the third transmission opportunity. Therefore, when the at least two second nodes send and/or receive a message in the fourth transmission opportunity group or the third transmission opportunity, a clock drift is small and a synchronization effect is good.

In a possible implementation, the method further includes: sending communication link configuration request information, where the communication link configuration request information is used to request to configure the communication link. According to the foregoing method, the communication link configuration request information may be sent to the first node, so that the first node may configure the communication link between the at least two second nodes based on the communication link configuration request information.

In a possible implementation, the communication link configuration request information includes one or more of the following: link type information of the communication link, indication information of the at least two second nodes, period information of the communication link, delay requirement information of the communication link, traffic volume information of the communication link, and resource requirement information of the communication link. According to the foregoing method, one or more of the link type information of the communication link, the indication information of the at least two second nodes, the period information of the communication link, the delay requirement information of the communication link, the traffic volume information of the communication link, and the resource requirement information of the communication link may be sent to the first node. In this way, the first node may properly configure a communication link between the at least two second nodes based on the foregoing information, and optionally, based on related information of master and slave link communication that is known by the first node, so as to make full use of resources and avoid a conflict.

In a possible implementation, the method further includes: receiving third configuration information, where the third configuration information includes indication information of a third slave node and/or indication information of a first resource, the third slave node is a node in the at least two second nodes, the third slave node is a control node in the at least two second nodes, and the first resource is used to carry control information of the communication link from the control node. According to the foregoing method, the third configuration information may be received, so that the control information of the communication link may be sent on the first resource indicated by the third configuration information, to manage or configure the communication link between the at least two second nodes. The direct link is managed by the node that uses the direct link for communication, so that dependency of the slave node on the master node and the master and slave link can be reduced, and resource configuration flexibility and independence of the direct link can be improved.

According to a third aspect, a communication method is provided. The method is described by using an example in which an execution body is a third slave node. The method includes: receiving third configuration information, where the third configuration information includes indication information of the third slave node and/or indication information of a first resource; and sending, on the first resource, control information of a communication link to a second node other than the third slave node in at least two second nodes, where the communication link includes a direct link between the at least two second nodes.

According to the method provided in the third aspect, the first node may configure the third slave node that manages or configures the direct link and a resource for sending corresponding management signaling (for example, the control information), so that the third slave node may manage or configure a communication link between the at least two second nodes, so as to avoid resource conflict and improve communication performance. In addition, after the first node determines the third slave node, the communication link between the at least two second nodes may be configured by the third slave node, and does not need to be configured by the first node. This reduces complexity of resource management by the first node. In addition, the direct link is managed by the node that uses the direct link for communication, so that dependency of the slave node on the master node and the master and slave link can be reduced, and resource configuration flexibility and independence of the direct link can be improved.

In a possible implementation, the communication link includes a first communication link or a first communication link group; and the control information of the communication link includes one or more of the following: an identifier of the first communication link; an identifier of the first communication link group; a node identifier; type information of the first communication link; type information of a communication link in the first communication link group; first time domain resource information; or frequency hopping channel indication information. The first communication link is a communication link between two second nodes in the at least two second nodes, the first communication link group includes a plurality of communication links between the at least two second nodes, the node identifier is used to identify at least one node in the at least two second nodes, the first time domain resource information indicates a time domain resource of the communication link, and the frequency hopping channel indication information indicates an available frequency hopping channel of the communication link. According to the foregoing method, the third slave node may configure one or more of the identifier of the first communication link, the identifier of the first communication link group, the node identifier, the type information of the first communication link, the type information of the communication link in the first communication link group, the first time domain resource information, or the frequency hopping channel indication information for a node in the at least two second nodes, so that the at least two second nodes can communicate with each other based on the foregoing information. The identifier of the first communication link or the identifier of the first communication link group may be used for link identification. For example, in subsequent communication, after receiving the message, the second node may determine, based on whether the message includes the identifier of the first communication link or the identifier of the first communication link group, whether the message is a message transmitted in the first communication link or the first communication link group. The identifier of the first communication link or the identifier of the first communication link group may also be used as a frequency hopping randomization seed of the first communication link or the first communication link group. The second node determines, based on the identifier of the first communication link or the identifier of the first communication link group, a frequency hopping channel for sending and/or receiving a message transmitted in the first communication link or the first communication link group.

In a possible implementation, the time domain resource of the communication link includes at least one transmission opportunity group, and the first time domain resource information includes one or more of the following: period information of the transmission opportunity group; first time length information; or information about a first start location. All of the at least one transmission opportunity group are continuous in time domain, the first time length information includes information indicating a time domain length of a first transmission opportunity group in the at least one transmission opportunity group, the information about the first start location includes information indicating a time domain start location of a second transmission opportunity group in the at least one transmission opportunity group, and the first transmission opportunity group is the same as or different from the second transmission opportunity group. According to the foregoing method, the third slave node may configure the at least one transmission opportunity group for the node in the at least two second nodes, so that the nodes in the at least two second nodes communicate with each other in the at least one transmission opportunity group.

In a possible implementation, the transmission opportunity group includes at least one transmission opportunity, the time domain resource of the communication link includes at least two transmission opportunities, and the first time domain resource information further includes one or more of the following: quantity information of the transmission opportunities; second time length information; or information about a second start location. The transmission opportunity is used by the second node to send at least one direct communication message and/or receive at least one direct communication message, and in different transmission opportunities, a same sequence of resources used by the second node to send the at least one direct communication message and/or receive the at least one direct communication message is configured; the quantity information of the transmission opportunities includes a quantity of transmission opportunities in a third transmission opportunity group in the at least one transmission opportunity group; and the second time length information includes a time domain length of a first transmission opportunity of the at least one transmission opportunity, the information about the second start location includes a time domain start location of sending or receiving a direct communication message in a second transmission opportunity of the at least one transmission opportunity, and the first transmission opportunity is the same as or different from the second transmission opportunity. According to the foregoing method, the third slave node may configure the at least one transmission opportunity for the node in the at least two second nodes, so that the nodes in the at least two second nodes communicate with each other in the at least one transmission opportunity.

According to a fourth aspect, a communication apparatus is provided, where the communication apparatus includes a sending module, the sending module is configured to send first configuration information on a first frequency hopping channel, the first configuration information is used to configure a communication link between at least two second nodes, the communication link includes a direct link between the at least two second nodes, and a first node corresponding to the communication apparatus is a master node of at least one second node in the two second nodes corresponding to the direct link. That the communication apparatus corresponds to the first node may be understood as that the communication apparatus is the first node itself or a component, a chip, an integrated circuit, or the like inside the first node.

In a possible implementation, the communication apparatus further includes a processing module, where the processing module is configured to generate or obtain the first configuration information.

In a possible implementation, the first node is a master node of the two second nodes corresponding to the direct link.

In a possible implementation, the communication link includes a first communication link or a first communication link group; and the first configuration information includes one or more of the following: an identifier of the first communication link; an identifier of the first communication link group; a node identifier; type information of the first communication link; type information of a communication link in the first communication link group; first time domain resource information; or frequency hopping channel indication information. The first communication link is a communication link between two second nodes in the at least two second nodes, the first communication link group includes a plurality of communication links between the at least two second nodes, the node identifier is used to identify at least one node in the at least two second nodes, the first time domain resource information indicates a time domain resource of the communication link, and the frequency hopping channel indication information indicates an available frequency hopping channel of the communication link.

In a possible implementation, the time domain resource of the communication link includes at least one transmission opportunity group, and the first time domain resource information includes one or more of the following: period information of the transmission opportunity group; first time length information; or information about a first start location. All of the at least one transmission opportunity group are continuous in time domain, the first time length information includes information indicating a time domain length of a first transmission opportunity group in the at least one transmission opportunity group, the information about the first start location includes information indicating a time domain start location of a second transmission opportunity group in the at least one transmission opportunity group, and the first transmission opportunity group is the same as or different from the second transmission opportunity group.

In a possible implementation, the transmission opportunity group includes at least one transmission opportunity, the time domain resource of the communication link includes at least two transmission opportunities, and the first time domain resource information further includes one or more of the following: quantity information of the transmission opportunities; second time length information; or information about a second start location. The transmission opportunity is used by the second node to send at least one direct communication message and/or receive at least one direct communication message, and in different transmission opportunities, a same sequence of resources used by the second node to send the at least one direct communication message and/or receive the at least one direct communication message is configured; the quantity information of the transmission opportunities includes a quantity of transmission opportunities in a third transmission opportunity group in the at least one transmission opportunity group; and the second time length information includes a time domain length of a first transmission opportunity of the at least one transmission opportunity, the information about the second start location includes a time domain start location of sending or receiving a direct communication message in a second transmission opportunity of the at least one transmission opportunity, and the first transmission opportunity is the same as or different from the second transmission opportunity.

In a possible implementation, the sending module is further configured to send a first message, where the first message indicates that a fourth transmission opportunity group is used for the communication link, and the fourth transmission opportunity group is included in the time domain resource of the communication link.

In a possible implementation, the sending module is specifically configured to: start to send the first message at a time domain start location of the fourth transmission opportunity group, or send the first message in a time domain resource that is before the fourth transmission opportunity group and that is adjacent to the fourth transmission opportunity group.

In a possible implementation, the sending module is further configured to send a first message, where the first message indicates that a third transmission opportunity is used for the communication link, and the third transmission opportunity is included in the time domain resource of the communication link.

In a possible implementation, the sending module is specifically configured to: start to send the first message at a time domain start location of the third transmission opportunity, or send the first message in a time domain resource that is before the third transmission opportunity and that is adjacent to the third transmission opportunity.

In a possible implementation, the first message is further used to synchronize the at least two second nodes.

In a possible implementation, the communication apparatus further includes a receiving module, where the receiving module is configured to receive communication link configuration request information, where the communication link configuration request information is used to request to configure the communication link.

In a possible implementation, the communication link configuration request information includes one or more of the following: link type information of the communication link, indication information of the at least two second nodes, period information of the communication link, delay requirement information of the communication link, traffic volume information of the communication link, or resource requirement information of the communication link.

In a possible implementation, the sending module is specifically configured to send the first configuration information to a first slave node on the first frequency hopping channel, where the first slave node is a node in the at least two second nodes, and the first configuration information is used to configure a communication link between the first slave node and a node other than the first slave node in the at least two second nodes. The sending module is further configured to send second configuration information to a second slave node on a second frequency hopping channel, where the second slave node is a second node that is in the at least two second nodes and that is different from the first slave node, and the second configuration information is used to configure a communication link between the second slave node and a node other than the second slave node in the at least two second nodes.

In a possible implementation, the sending module is specifically configured to send the first configuration information to a second node group on the first frequency hopping channel, where the second node group includes the at least two second nodes.

In a possible implementation, the sending module is further configured to send third configuration information, where the third configuration information includes indication information of a third slave node and/or indication information of a first resource, the third slave node is a node in the at least two second nodes, the third slave node is a control node in the at least two second nodes, and the first resource is used to carry control information of the communication link from the control node.

According to a fifth aspect, a communication apparatus is provided. The communication apparatus includes a receiving module and a processing module. The receiving module is configured to receive first configuration information from a first node on a first frequency hopping channel, where the first configuration information is used to configure a communication link between the at least two second nodes, the at least two nodes include a target node, the communication link includes a direct link between the target node and at least one second node that is in the at least two second nodes and that is different from the target node, and the first node is a master node of the target node. The processing module is configured to communicate, based on the first configuration information, with the at least one second node that is in the at least two second nodes and that is different from the target node.

In a possible implementation, the first node is a master node of the two second nodes corresponding to the direct link.

In a possible implementation, the communication link includes a first communication link or a first communication link group; and the first configuration information includes one or more of the following: an identifier of the first communication link; an identifier of the first communication link group; a node identifier; type information of the first communication link; type information of a communication link in the first communication link group; first time domain resource information; or frequency hopping channel indication information. The first communication link is a communication link between two second nodes in the at least two second nodes, the first communication link group includes a plurality of communication links between the at least two second nodes, the node identifier is used to identify at least one node in the at least two second nodes, the first time domain resource information indicates a time domain resource of the communication link, and the frequency hopping channel indication information indicates an available frequency hopping channel of the communication link.

In a possible implementation, the time domain resource of the communication link includes at least one transmission opportunity group, and the first time domain resource information includes one or more of the following: period information of the transmission opportunity group; first time length information; or information about a first start location. All of the at least one transmission opportunity group are continuous in time domain, the first time length information includes information indicating a time domain length of a first transmission opportunity group in the at least one transmission opportunity group, the information about the first start location includes information indicating a time domain start location of a second transmission opportunity group in the at least one transmission opportunity group, and the first transmission opportunity group is the same as or different from the second transmission opportunity group.

In a possible implementation, the transmission opportunity group includes at least one transmission opportunity, the time domain resource of the communication link includes at least two transmission opportunities, and the first time domain resource information further includes one or more of the following: quantity information of the transmission opportunities; second time length information; or information about a second start location. The transmission opportunity is used by the second node to send at least one direct communication message and/or receive at least one direct communication message, and in different transmission opportunities, a same sequence of resources used by the second node to send the at least one direct communication message and/or receive the at least one direct communication message is configured; the quantity information of the transmission opportunities includes a quantity of transmission opportunities in a third transmission opportunity group in the at least one transmission opportunity group; and the second time length information includes a time domain length of a first transmission opportunity of the at least one transmission opportunity, the information about the second start location includes a time domain start location of sending or receiving a direct communication message in a second transmission opportunity of the at least one transmission opportunity, and the first transmission opportunity is the same as or different from the second transmission opportunity.

In a possible implementation, the receiving module is further configured to receive a first message, where the first message indicates that a fourth transmission opportunity group is used for the communication link, and the fourth transmission opportunity group is included in the time domain resource of the communication link.

In a possible implementation, the receiving module is specifically configured to: start to receive the first message at a time domain start location of the fourth transmission opportunity group, or receive the first message in a time domain resource that is before the fourth transmission opportunity group and that is adjacent to the fourth transmission opportunity group.

In a possible implementation, the receiving module is further configured to receive a first message, where the first message indicates that a third transmission opportunity is used for the communication link, and the third transmission opportunity is included in the time domain resource of the communication link.

In a possible implementation, the receiving module is specifically configured to: start to receive the first message at a time domain start location of the third transmission opportunity, or receive the first message in a time domain resource that is before the third transmission opportunity and that is adjacent to the third transmission opportunity.

In a possible implementation, the processing module is further configured to synchronize with a node in the at least two second nodes based on the first message.

In a possible implementation, the communication apparatus further includes a sending module, where the sending module is configured to send communication link configuration request information, where the communication link configuration request information is used to request to configure the communication link.

In a possible implementation, the communication link configuration request information includes one or more of the following: link type information of the communication link, indication information of the at least two second nodes, period information of the communication link, delay requirement information of the communication link, traffic volume information of the communication link, or resource requirement information of the communication link.

In a possible implementation, the receiving module is further configured to receive third configuration information, where the third configuration information includes indication information of a third slave node and/or indication information of a first resource, the third slave node is a node in the at least two second nodes, the third slave node is a control node in the at least two second nodes, and the first resource is used to carry control information of the communication link from the control node.

According to a sixth aspect, a communication apparatus is provided. The communication apparatus includes a receiving module and a sending module. The receiving module is configured to receive third configuration information, where the third configuration information includes indication information of a third slave node corresponding to the communication apparatus and/or indication information of a first resource. The sending module is configured to send, on a first resource, control information of a communication link to a second node other than the third slave node in at least two second nodes, where the communication link includes a direct link between the at least two second nodes. That the communication apparatus corresponds to the third slave node may be understood as that the communication apparatus is the third slave node or a component, a chip, an integrated circuit, or the like inside the third slave node.

In a possible implementation, the communication link includes a first communication link or a first communication link group; and the control information of the communication link includes one or more of the following: an identifier of the first communication link; an identifier of the first communication link group; a node identifier; type information of the first communication link; type information of a communication link in the first communication link group; first time domain resource information; or frequency hopping channel indication information. The first communication link is a communication link between two second nodes in the at least two second nodes, the first communication link group includes a plurality of communication links between the at least two second nodes, the node identifier is used to identify at least one node in the at least two second nodes, the first time domain resource information indicates a time domain resource of the communication link, and the frequency hopping channel indication information indicates an available frequency hopping channel of the communication link.

In a possible implementation, the time domain resource of the communication link includes at least one transmission opportunity group, and the first time domain resource information includes one or more of the following: period information of the transmission opportunity group; first time length information; or information about a first start location. All of the at least one transmission opportunity group are continuous in time domain, the first time length information includes information indicating a time domain length of a first transmission opportunity group in the at least one transmission opportunity group, the information about the first start location includes information indicating a time domain start location of a second transmission opportunity group in the at least one transmission opportunity group, and the first transmission opportunity group is the same as or different from the second transmission opportunity group.

In a possible implementation, the transmission opportunity group includes at least one transmission opportunity, the time domain resource of the communication link includes at least two transmission opportunities, and the first time domain resource information further includes one or more of the following: quantity information of the transmission opportunities; second time length information; or information about a second start location. The transmission opportunity is used by the second node to send at least one direct communication message and/or receive at least one direct communication message, and in different transmission opportunities, a same sequence of resources used by the second node to send the at least one direct communication message and/or receive the at least one direct communication message is configured; the quantity information of the transmission opportunities includes a quantity of transmission opportunities in a third transmission opportunity group in the at least one transmission opportunity group; and the second time length information includes a time domain length of a first transmission opportunity of the at least one transmission opportunity, the information about the second start location includes a time domain start location of sending or receiving a direct communication message in a second transmission opportunity of the at least one transmission opportunity, and the first transmission opportunity is the same as or different from the second transmission opportunity.

According to a seventh aspect, a communication apparatus is provided, and includes a processor. The processor is configured to: after being coupled to a memory and reading instructions in the memory, perform, according to the instructions, the method according to any one of the foregoing aspects. The communication apparatus may be the first node in the first aspect, or an apparatus including the first node. Alternatively, the communication apparatus may be the first slave node in the second aspect, or an apparatus including the first slave node. Alternatively, the communication apparatus may be the third slave node in the third aspect, or an apparatus including the third slave node.

With reference to the seventh aspect, in a possible implementation, the communication apparatus further includes a memory. The memory is configured to store necessary program instructions and data.

With reference to the seventh aspect, in a possible implementation, the communication apparatus is a chip or a chip system. Optionally, when the communication apparatus is the chip system, the communication apparatus may include a chip, or may include a chip and another discrete component.

According to an eighth aspect, a communication apparatus is provided. The communication apparatus includes a processor and an interface circuit. The interface circuit is configured to receive a computer program or instructions and transmit the computer program or the instructions to a processor. The processor is configured to execute the computer program or the instructions, to enable the communication apparatus to perform the method according to any one of the foregoing aspects.

With reference to the eighth aspect, in a possible implementation, the communication apparatus is a chip or a chip system. Optionally, when the communication apparatus is the chip system, the communication apparatus may include a chip, or may include a chip and another discrete component.

According to a ninth aspect, a computer-readable storage medium is provided. The computer-readable storage medium stores instructions. When the instructions are run on a computer, the computer is enabled to perform the method according to any one of the foregoing aspects.

According to a tenth aspect, a computer program product including instructions is provided. When the computer program product runs on a computer, the computer is enabled to perform the method according to any one of the foregoing aspects.

For a technical effect achieved by any one of the possible implementations of the fourth aspect to the tenth aspect, refer to a technical effect achieved by any one of the first aspect to the third aspect or different possible implementations of any one of the foregoing aspects. Details are not described herein again.

According to an eleventh aspect, a communication system is provided. The communication system includes a first node configured to perform the method according to the first aspect and a first slave node configured to perform the method according to the second aspect.

With reference to the eleventh aspect, in a possible implementation, the communication system further includes a third slave node configured to perform the method according to the third aspect.

### BRIEF DESCRIPTION OF DRAWINGS

FIG. 1A is a schematic diagram 1 of a multipoint-to-multipoint communication link according to an embodiment of this application;
FIG. 1B is a schematic diagram 2 of a multipoint-to-multipoint communication link according to an embodiment of this application;
FIG. 2A is a schematic diagram of a transmission opportunity group according to an embodiment of this application;
FIG. 2B is a schematic diagram of a transmission opportunity according to an embodiment of this application;
FIG. 2C is a schematic diagram of a transmission pattern of a transmission opportunity according to an embodiment of this application;
FIG. 3A is a schematic diagram of an architecture of a communication system according to an embodiment of this application;
FIG. 3B is a schematic diagram of a wide area wireless communication scenario according to an embodiment of this application;
FIG. 3C is a schematic diagram of a local area wireless communication scenario according to an embodiment of this application;
FIG. 3D is a schematic diagram of a wireless communication scenario in an intelligent terminal according to an embodiment of this application;
FIG. 3E is a schematic diagram of a V2X communication scenario according to an embodiment of this application;
FIG. 4 is a schematic diagram of a hardware structure of a communication apparatus according to an embodiment of this application;
FIG. 5 is a schematic flowchart 1 of a communication method according to an embodiment of this application;
FIG. 6 is a schematic flowchart 2 of a communication method according to an embodiment of this application;
FIG. 7 is a schematic diagram 1 of a structure of a communication apparatus according to an embodiment of this application;
FIG. 8 is a schematic diagram 2 of a structure of a communication apparatus according to an embodiment of this application; and
FIG. 9 is a schematic diagram 3 of a structure of a communication apparatus according to an embodiment of this application.

### DESCRIPTION OF EMBODIMENTS

First, for ease of understanding technical solutions in embodiments of this application, technical terms in the embodiments of this application are explained and described.

### 1. Communication link and communication link group

In embodiments of this application, the communication link may be used for a communication between nodes. For example, a master node and a slave node may communicate with each other by using a master and slave communication link. Two slave nodes may communicate with each other by using a slave and slave communication link. The slave and slave communication link in this embodiment of this application refers to a direct link between slave nodes. That is, the slave nodes may directly communicate with each other without being forwarded by the master node. This communication manner may be referred to as direct communication, a communication link corresponding to the direct communication is referred to as a direct link, and the direct link may alternatively be referred to as a direct communication link, a slave and slave link, or the like. This is not limited.

In this embodiment of this application, the communication links may be classified into a plurality of types, for example, a point-to-point communication link, a point-to-multipoint communication link, or a multipoint-to-multipoint communication link. The point-to-point communication link is a communication link between two nodes, for example, a communication link between a master node and a slave node, or a direct link between two slave nodes. The point-to-multipoint communication link is a communication link between one node and a plurality of nodes, for example, a communication link between a master node and a plurality of slave nodes, or a communication link between a slave node and a plurality of other slave nodes. The multipoint-to-multipoint communication link may include a bidirectional communication link or a mesh communication link.

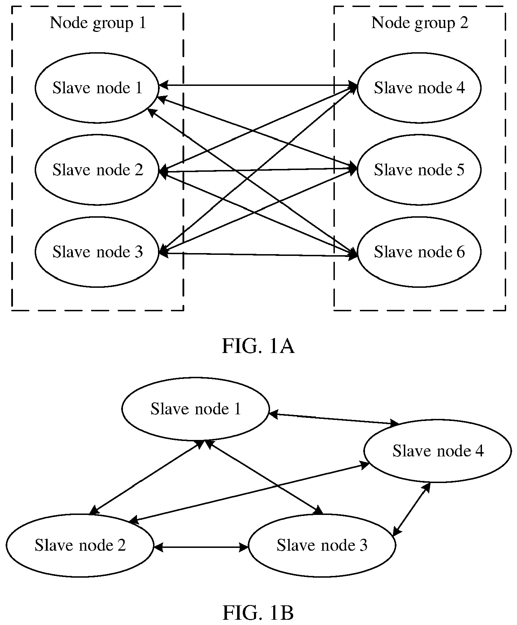

The bidirectional communication link may be a communication link between two node groups. If both nodes in the two node groups are slave nodes, the bidirectional communication link may alternatively be referred to as a bidirectional direct link. As shown in FIG. 1A, the bidirectional communication link is a communication link between a node group 1 and a node group 2. The node group 1 includes a slave node 1, a slave node 2, and a slave node 3, and the node group 2 includes a slave node 4, a slave node 5, and a slave node 6. In FIG. 1A, a node in the node group 1 may communicate with a node in the node group 2. For example, a slave node 1 may communicate with one or more nodes in the node group 2, and a slave node 5 may communicate with one or more nodes in the node group 1.

The mesh communication link may mean that each node in the node group may communicate with another node in the node group. If nodes in the two node groups are slave nodes, the mesh communication link may alternatively be referred to as a mesh direct link. As shown in FIG. 1B, the node group includes a slave node 1, a slave node 2, a slave node 3, and a slave node 4. The slave node 1 may communicate with the slave node 2, the slave node 3, and the slave node 4. The slave node 2 may communicate with the slave node 1, the slave node 3, and the slave node 4. The slave node 3 may communicate with the slave node 1, the slave node 2, and the slave node 4. The slave node 4 may communicate with the slave node 1, the slave node 2, and the slave node 3.

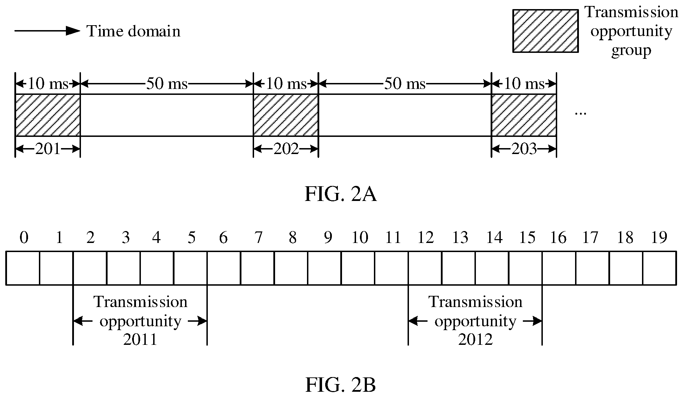

It may be understood that, if a link is understood as a communication connection relationship between two nodes, the point-to-multipoint communication link or the multipoint-to-multipoint communication link may be understood as a communication link group including a plurality of communication links. FIG. 1A is used as an example. A communication link between the slave node 1 and the slave node 4, a communication link between the slave node 2 and the slave node 5, and a communication link between the slave node 3 and the slave node 6 may form a communication link group. FIG. 2A is used as an example. A communication link between the slave node 3 and the slave node 2, a communication link between the slave node 3 and the slave node 1, and a communication link between the slave node 3 and the slave node 4 may form a communication link group.

### 2. Message and direct communication message

The message in this embodiment of this application includes a predefined signal and/or a configured signal and control information. Alternatively, the message in this embodiment of this application includes a predefined signal and/or a configured signal, control information, and data information. The predefined signal may be a signal defined in a protocol or a specification, or a signal predefined in a specific manner. The foregoing signal may be used by a receiving node to perform operations such as dynamic gain control, synchronization, or channel estimation. The control information has one or more functions of assisting the receiving node in receiving data information in a message, providing feedback on whether a message previously received by a sending node is received or not received, and controlling a transmission flow, for example, assisting the receiving node in demodulating and decoding the data information in the message, filter out useless content, and retransmit and combine the data information. The data information may be used to carry service data and/or control signaling.

In this embodiment of this application, the direct communication message is one of the foregoing messages, and may be a message sent and/or received between slave nodes. For example, the direct communication message is a message that is sent by a slave node on a consecutive time domain resource (for example, one or more consecutive time units) on a frequency hopping channel and that is used by at least one slave node to receive.

### 3. Transmission opportunity group and transmission opportunity

In this embodiment of this application, one transmission opportunity group may be a segment of consecutive time domain resources that are configured or preconfigured and that are used by one communication link or one communication link group to transmit a message. For example, the transmission opportunity group may include at least one time unit. In this embodiment of this application, the time unit may be a slot, a mini-slot (mini-slot), a time unit (for example, a subframe or a frame) including a plurality of slots, or the like. This is not limited. In time domain, different transmission opportunity groups may be continuous or discontinuous.

FIG. 2A is a schematic diagram of a transmission opportunity group according to an embodiment of this application. FIG. 2A shows three transmission opportunity groups, which are respectively a transmission opportunity group 201, a transmission opportunity group 202, and a transmission opportunity group 203. Each transmission opportunity group includes 10 milliseconds (ms), and an interval between two adjacent transmission opportunity groups is 50 ms. If the transmission opportunity group 201 is configured for a communication link between the node 1 and the node 2, the node 1 and the node 2 may communicate by using the transmission opportunity group 201.

In this embodiment of this application, one transmission opportunity group includes at least one transmission opportunity, one transmission opportunity includes a resource used to transmit at least one message in one communication link, and transmission opportunities that are in one transmission opportunity group and that are used for a same communication link have a same transmission pattern. That is, in different transmission opportunities that are configured in the transmission opportunity group and that are used for one communication link or one communication link group, a same sequence of resources used for a same node to send and/or receive messages is configured. In other words, in different transmission opportunities in the transmission opportunity group, nodes that transmit messages are the same, and the nodes send and/or receive messages in a same order in different transmission opportunities. For example, objects that send and/or receive messages on an i^{th} resource in different transmission opportunities in the transmission opportunity group are the same, and transmission manners (such as uplink or downlink) of messages sent and/or received on the i^{th} resource are the same. Herein, i is a positive integer. One resource includes one or more consecutive time units.

FIG. 2B is a schematic diagram of transmission opportunities in the foregoing transmission opportunity group 201. In FIG. 2B, the transmission opportunity group 201 includes a transmission opportunity 2011 and a transmission opportunity 2012. The transmission opportunity 2011 and the transmission opportunity 2012 each include four slots. The transmission opportunity 2011 starts from a slot 2 and ends from a slot 5 in the transmission opportunity group 201. The transmission opportunity 2012 starts from a slot 12 and ends from a slot 15 in the transmission opportunity group 201. The transmission opportunity 2011 and the transmission opportunity 2012 are separated by six slots.

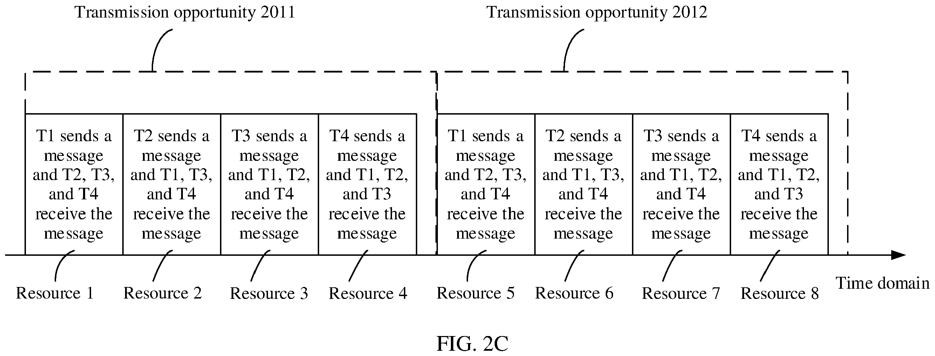

FIG. 2C is a schematic diagram of a transmission pattern of a transmission opportunity 2011 and a transmission pattern of a transmission opportunity 2012. In FIG. 2C, the transmission opportunity 2011 and the transmission opportunity 2012 may be used for a communication link 1 to a communication link 3 to transmit messages. The communication link 1 is used for communication between a slave node 1 (Tl) and a slave node 2 (T2), a communication link 2 is used for communication between the slave node 1 and a slave node 3 (T3), and the communication link 3 is used for communication between the slave node 1 and a slave node 4 (T4). The transmission pattern of the transmission opportunity 2011 shown in FIG. 2C may be described as follows: The slave node 1 sends a message to the slave node 2, the slave node 3, and the slave node 4 on a resource 1; the slave node 2 sends a message to the slave node 1, the slave node 3, and the slave node 4 on a resource 2; the slave node 3 sends a message to the slave node 1, the slave node 2, and the slave node 4 on a resource 3; and the slave node 4 sends a message to the slave node 1, the slave node 2, and the slave node 3 on a resource 4. The transmission pattern of the transmission opportunity 2012 is the same as the transmission pattern of the transmission opportunity 2011, and may be specifically described as follows: The slave node 1 sends a message to the slave node 2, the slave node 3, and the slave node 4 on a resource 5; the slave node 2 sends a message to the slave node 1, the slave node 3, and the slave node 4 on a resource 6; the slave node 3 sends a message to the slave node 1, the slave node 2, and the slave node 4 on a resource 7; and the slave node 4 sends a message to the slave node 1, the slave node 2, and the slave node 3 on a resource 8.

It may be understood that time lengths of two transmission opportunities with a same transmission pattern may be the same or different. This is not limited in this application. In this embodiment of this application, the transmission opportunity group may alternatively be referred to as an event (event), and the transmission opportunity may also be referred to as a subevent (subevent).

### 4. Frequency hopping and frequency hopping channel

In this embodiment of this application, nodes may communicate with each other based on a frequency hopping technology. The node may be a master node or a slave node. That is, communication may be performed between a master node and a slave node based on the frequency hopping technology. Alternatively, communication may be performed between slave nodes based on the frequency hopping technology.

A frequency band used for communication may be divided into a plurality of frequency hopping channels, and each frequency hopping channel corresponds to a center frequency. A frequency hopping channel is sometimes referred to as a frequency hopping frequency. In general, a node uses a frequency hopping channel at a time when sending and/or receiving a message, and does not change the frequency hopping channel during the transmission and/or receiving of the message. When a node transmits and/or receives a plurality of messages, the frequency hopping channel used varies with time. (The change with time is only used to reflect a change of the frequency hopping channel, but the change is not limited to each time.)

In a possible implementation, both parties of a message may determine, by using a predefined frequency hopping algorithm based on a frequency hopping randomization seed and information about a time domain resource for transmitting the message, a frequency hopping channel for transmitting the message. The frequency hopping randomization seed may be a frequency hopping identifier of a link where the message is located. The time domain resource information for transmitting the message may be, for example, a number of a slot in which a start moment of a transmission opportunity for transmitting the message is located, or may be a number of a slot in which a start moment of a transmission opportunity group for transmitting the message is located. In addition, to avoid a frequency hopping channel with strong interference or a frequency hopping channel with poor transmission performance due to other reasons, some frequency hopping channels can be set to unavailable and available frequency hopping channels can be used for frequency hopping. This technology is called adaptive frequency hopping. In an adaptive frequency hopping technology, both parties of a message may determine, by using a predefined frequency hopping algorithm based on three types of information: a frequency hopping identifier of a link where the message is located, information about a time domain resource for transmitting the message, and an available frequency hopping channel, a frequency hopping channel for transmitting the message.

In a possible implementation, the frequency hopping channel is classified into a general frequency hopping channel and a broadcast-dedicated frequency hopping channel based on whether the frequency hopping channel can be used to send a message other than a broadcast-type message (also referred to as a connectionless transmission message). For example, a frequency hopping channel that can be used to send a message other than the broadcast-type message may be referred to as the general frequency hopping channel, and a frequency hopping channel that cannot be used to send a message other than the broadcast-type message may be referred to as the broadcast-dedicated frequency hopping channel.

### 5. Type of a communication link

In this embodiment of this application, the type of the communication link may include a point-to-point communication link, a point-to-multipoint communication link, a multipoint-to-multipoint communication link, a communication link with high reliability assurance, a communication link with low reliability assurance, a communication link with feedback support, a communication link without feedback support, a communication link based on a code block group (code block group, CBG) feedback, a communication link based on a transport block (transport block, TB) feedback, or the like.

For descriptions of the point-to-point communication link, the point-to-multipoint communication link, and the multipoint-to-multipoint communication link, refer to the foregoing descriptions of the communication link and the communication link group. The communication link with high reliability assurance may mean that for a message, a sending node sends a next message only after a receiving node successfully receives the message by using the communication link. The communication link with low reliability assurance may be a communication link that allows abandonment of transmission of a specific data packet (for example, a data packet whose transmission failure quantity exceeds a threshold) when a specific condition is met, for example, when a consecutive transmission failure quantity exceeds a threshold. The communication link with feedback support may be a link in which the receiving node may send, to the sending node after receiving one or more messages by using the communication link, feedback information corresponding to the one or more messages. The communication link without feedback support may be a link in which the receiving node does not send feedback information to the sending node after receiving a message by using the communication link. The communication link based on the CBG feedback may be a link in which the receiving node sends feedback information to the sending node, where the feedback information includes information about whether a CBG in a TB sent by the sending node is correctly transmitted. The communication link based on the TB feedback may be a link in which the receiving node sends feedback information to the sending node, where the feedback information includes information about whether a TB sent by the sending node is correctly transmitted (but does not include information about whether a CBG in the TB is correctly transmitted).

It may be understood that in this embodiment of this application, the receiving node may add the feedback information to a message and send the message to the sending node. In addition to the feedback information, the message may further include other information, for example, data sent by the receiving node to the sending node.

The following describes implementations of embodiments of this application in detail with reference to the accompanying drawings.

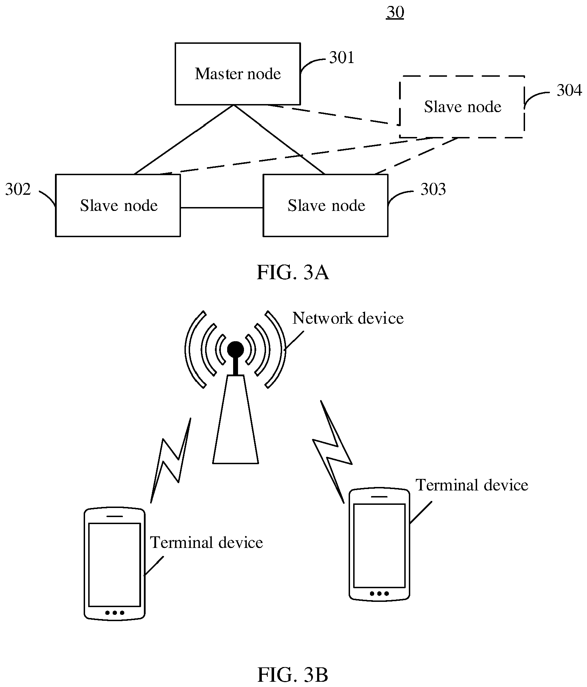

FIG. 3A is a schematic diagram of an architecture of a communication system 30 according to an embodiment of this application. In FIG. 3A, the communication system 30 may include one or more master nodes 301 (only one is shown), a slave node 302, and a slave node 303. Optionally, the communication system 30 further includes a slave node 304.

In FIG. 3A, the master node and a slave node may communicate with each other in a wireless or wired manner, and slave nodes may also communicate with each other in a wireless or wired manner. The master node and the slave node may be understood as two types of communication apparatuses with a communication function that are distinguished based on a logical function. In a possible example, the master node and the slave node belong to a same communication domain. The master node may manage a resource (for example, a time domain resource or a frequency domain resource) in a communication domain, and has a function of scheduling a resource on a communication link between the master node and the slave node, and/or on a communication link between the slave nodes. The slave node obeys scheduling of the master node, and communicates with the master node or another node by using the time-frequency resource allocated by the master node. A message sent by the master node may be received by a preconfigured or indicated slave node, and the message is a unicast message of a master and slave communication link. Similarly, a message sent by the slave node may be received by a preconfigured or indicated slave node, and the message is a unicast message of a direct link. A message sent by the master node may be received by a plurality of preconfigured or indicated slave nodes, and the message is a multicast message of the master and slave communication link. Similarly, a message sent by the slave node may be received by a plurality of preconfigured or indicated slave nodes, and the message is a multicast message of a direct link. A message sent by the master node may be received by any node, and the message is a broadcast message sent by the master node. Similarly, a message sent by the slave node may be received by any node, and the message is a broadcast message sent by the slave node.

Information transmitted between the master node and the slave node, or information transmitted between the slave nodes includes service data and/or signaling. The information transmitted between the master node and the slave node is carried by a message transmitted between the master node and the slave node, and the information transmitted between the slave nodes is carried by a message transmitted between the slave nodes.

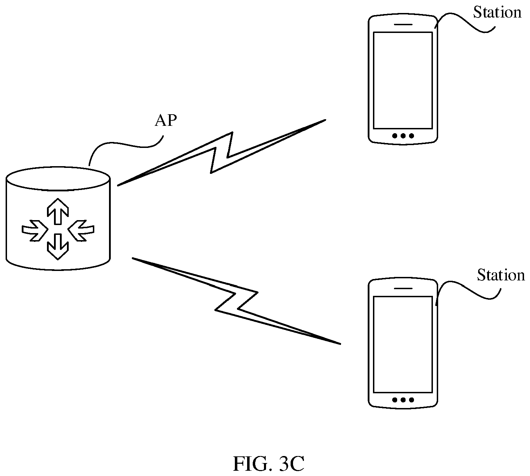

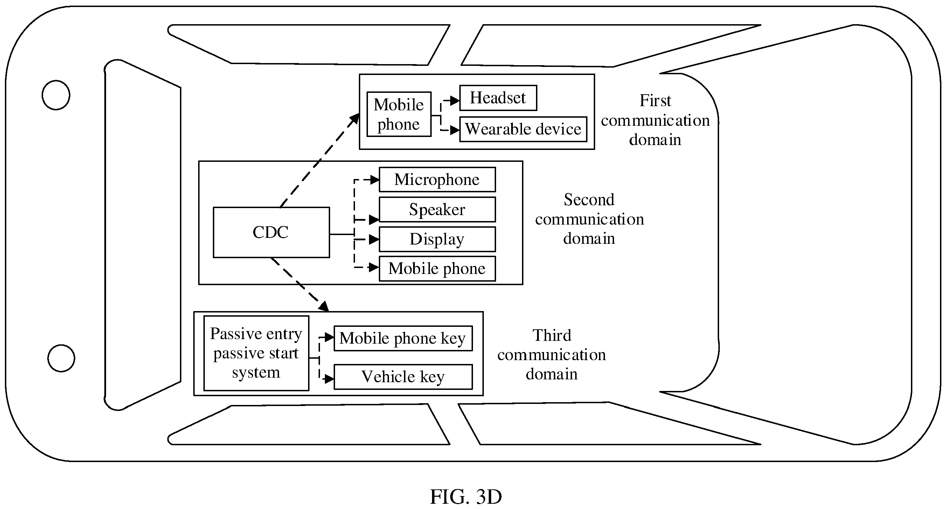

Based on the communication system architecture shown in FIG. 3A, the communication system may be applied to a wide-area wireless communication scenario (referring to FIG. 3B below). For example, the wide-area wireless communication scenario may include communication between a network device and a plurality of terminal devices. Alternatively, the communication system architecture may be applied to a local area wireless communication scenario (referring to FIG. 3C below). For example, the local area wireless communication scenario may include communication between an access point (access point, AP) and a plurality of stations (stations). Alternatively, the communication system architecture may be applied to an in-vehicle wireless communication scenario (referring to FIG. 3D below). For example, the in-vehicle wireless communication scenario may include communication between a head unit (for example, a cockpit domain controller (cockpit domain controller, CDC)) and a speaker, a microphone, a display, or a mobile phone; communication between a mobile phone and a wearable device, for example, a headset; or communication between a passive entry passive start (passive entry passive start, PEPS) system and a mobile phone key or a vehicle key.

FIG. 3B is a schematic diagram of a wide-area wireless communication scenario according to an embodiment of this application. In this application scenario, one network device and two terminal devices are used as an example. The terminal device communicates with the network device in a wireless manner. The network device may serve as a master node, and the two terminal devices may serve as slave nodes. The network device may allocate a time-frequency resource to the terminal device, and the terminal device may follow scheduling by the network device. With reference to the communication system architecture shown in FIG. 3A, the network device may be the master node 301, and the two terminal devices may be any two nodes in the slave node 302 to the slave node 304.

The network device is an access device through which the terminal device accesses the communication system in a wireless manner and may provide a wireless communication function for the terminal device. The network device may be a base station (base station), an evolved NodeB (evolved NodeB, eNodeB), a transmission (sending and reception) point (transmission reception point, TRP), a next generation NodeB (next generation NodeB, gNB) in a 5G communication system, a base station in a future communication system, an access node in a wireless fidelity (wireless-fidelity, Wi-Fi) system, or the like; or may be a module or a unit that completes some functions of a base station, for example, may be a central unit (central unit, CU) or a distributed unit (distributed unit, DU). A specific technology and a specific device form that are used by the network device are not limited in embodiments of this application.

The terminal device may also be referred to as a terminal, user equipment (user equipment, UE), a mobile station, a mobile terminal, or the like. The terminal device may be a mobile phone, a tablet computer, a computer having a wireless transceiver function, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like. A specific technology and a specific device form that are used for the terminal device are not limited in this application.

FIG. 3C is a schematic diagram of a local area wireless communication scenario according to an embodiment of this application, that is, another possible application scenario. In this application scenario, one access point (access point, AP) and two stations (station) are used as an example. The AP serves as a master node, and the station serves as a slave node. The station may access the AP by using wireless fidelity (wireless fidelity, Wi-Fi). In FIG. 3C, a mobile phone is used as an example of the station. With reference to the communication system architecture shown in FIG. 3A, the AP may be the master node 301, and the two stations may be any two nodes in the slave node 302 to the slave node 304.

FIG. 3D is a schematic diagram of a wireless communication scenario in an intelligent terminal according to an embodiment of this application, that is, another possible application scenario. The intelligent terminal may be, for example, a vehicle. The vehicle includes but is not limited to an unmanned vehicle, an intelligent vehicle (for example, automated guided vehicle (automated guided vehicle, AGV)), an electric vehicle, a digital vehicle, or a smart manufacturing vehicle. There are a plurality of communication domains in an in-vehicle wireless communication scenario, and one communication domain may include one master node and at least one slave node.

In FIG. 3D, a mobile phone, a headset, and a wearable device belong to a communication domain, for example, are referred to as a first communication domain. The mobile phone serves as a master node, and the headset and the wearable device serve as slave nodes. With reference to the communication system architecture shown in FIG. 3A, the mobile phone may be the master node 301, and the headset and the wearable device may be any two nodes in the slave node 302 to the slave node 304. A CDC, a display, a microphone, a sound box, and the mobile phone belong to one communication domain, for example, are referred to as a second communication domain. The CDC serves as a master node, and the display, the microphone, the sound box, and the mobile phone serve as slave nodes. With reference to the communication system architecture shown in FIG. 3A, the CDC may be the master node 301. The display, the microphone, the sound box, and the mobile phone may be a slave node of the master node 301. A PEPS system, a mobile phone key, and a vehicle key belong to one communication domain, for example, are referred to as a third communication domain. The PEPS system is used as a master node, and the mobile phone key and the vehicle key are used as slave nodes. With reference to the communication system architecture shown in FIG. 3A, the PEPS system may be the master node 301, and the mobile phone key and the vehicle key may be any two nodes from the slave node 302 to the slave node 304.

It may be understood that, when vehicle-mounted devices in the vehicle are divided into a plurality of communication domains, there may be a plurality of factors for division. For example, the vehicle-mounted devices may be divided based on functions implemented by the vehicle-mounted devices. Further, if several vehicle-mounted devices cooperate with each other to implement a function (for example, a power function), these vehicle-mounted devices may be divided into a communication domain. For another example, the vehicle-mounted devices may be divided based on spatial locations in a vehicle in which the vehicle-mounted devices are located. For another example, the vehicle-mounted devices may be divided based on factors such as spatial locations in a vehicle in which the vehicle-mounted devices are located and functions collaboratively completed by the vehicle-mounted devices. For another example, communication domains may alternatively be divided from a resource perspective. For example, a resource that is allocated by a node and that is used by the node to communicate with another node may be referred to as a communication domain. In this case, the node is a master node in the communication domain, and the another node that communicates with the node by using the communication domain (resource) is a slave node in the communication domain. It should be understood that the communication domain shown in FIG. 3D is merely an example. In addition, each communication domain may further include another vehicle-mounted device. For example, the third communication domain may further include a body control module (body control module, BCM).

It should be noted that a master node in a communication domain may also be used as a slave node in another communication domain. For example, the mobile phone in the first communication domain may be used as a slave node in the second communication domain.

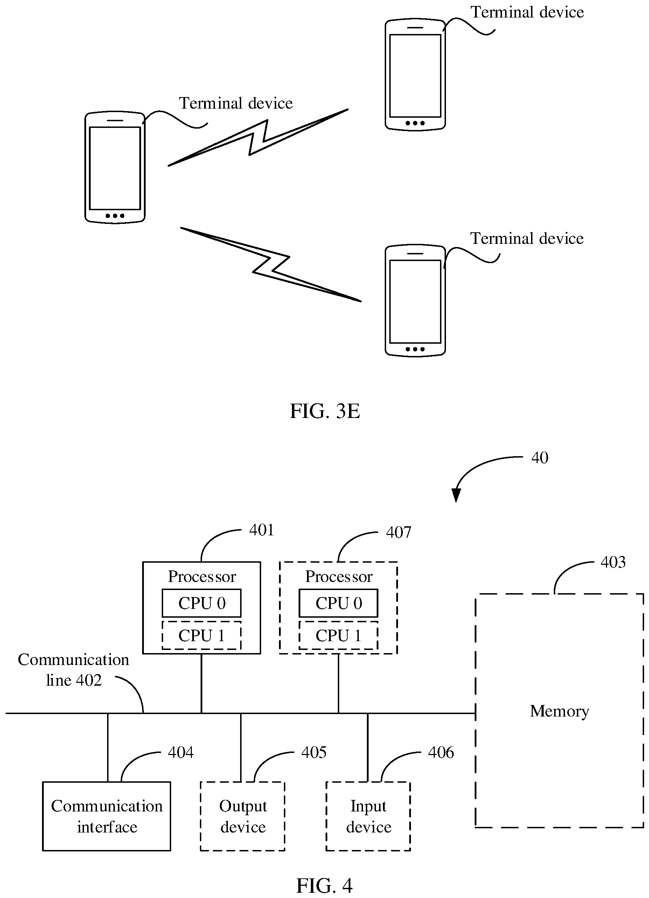

It should be noted that the foregoing system architecture and application scenario are merely examples for description, and constitute no limitation on the technical solutions provided in this application. For example, the system architecture shown in FIG. 3A may be further applied to a vehicle to everything (vehicle to everything, V2X) communication scenario. A schematic diagram of the V2X communication scenario may be shown in FIG. 3E. An example in which three terminal devices are included in the application scenario is used. The three terminal devices may communicate with each other by using a sidelink (sidelink, SL). In this scenario, a terminal device configured to schedule resources may be used as a master node, and a terminal device configured to listen to resource scheduling may be used as a slave node. With reference to the communication system architecture shown in FIG. 3A, the terminal device configured to schedule a resource may be the master node 301, and the terminal device configured to listen to resource scheduling may be a slave node of the master node 301.

It should be noted that, in this embodiment of this application, the master node may alternatively be referred to as a management (grant, G) node, and the slave node may alternatively be referred to as a terminal (terminal, T) node.

Optionally, each node (for example, a master node or a slave node) in FIG. 3A in this embodiment of this application may alternatively be referred to as a communication apparatus, and the node may be a general-purpose device or a dedicated device. This is not specifically limited in this embodiment of this application.

Optionally, related functions of all nodes in FIG. 3A in this embodiment of this application may be implemented by one device, or may be jointly implemented by a plurality of devices, or may be implemented by one or more functional modules in one device. This is not specifically limited in this embodiment of this application. It may be understood that the foregoing function may be a network element in a hardware device, may be a software function running on dedicated hardware, a combination of hardware and software, or a virtualization function instantiated on a platform (for example, a cloud platform).

During specific implementation, all nodes in FIG. 3A may be in a composition structure shown in FIG. 4 or include components shown in FIG. 4. FIG. 4 is a schematic diagram of a hardware structure of a communication apparatus applicable to an embodiment of this application. The communication apparatus 40 includes at least one processor 401 and at least one communication interface 404, and is configured to implement the method provided in embodiments of this application. The communication apparatus 40 may further include a communication line 402 and a memory 403.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a path, for example, a bus, for transmitting information between the foregoing components.

The communication interface 404 is configured to communicate with another device or a communication network. The communication interface 404 may be an apparatus of any transceiver type, for example, may be an Ethernet interface, a radio access network (radio access network, RAN) interface, a wireless local area network (wireless local area networks, WLAN) interface, a transceiver, a pin, a bus, or a transceiver circuit.

The memory 403 may be a read-only memory (read-only memory, ROM) or another type of static storage device that can store static information and instructions, or a random access memory (random access memory, RAM) or another type of dynamic storage device that can store information and instructions. The memory 403 may alternatively be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that is accessible by a computer, but is not limited thereto. The memory may exist independently, and is coupled to the processor 401 through the communication line 402. Alternatively, the memory 403 may be integrated with the processor 401. The memory provided in embodiments of this application may be usually non-volatile.

The memory 403 is configured to store computer-executable instructions for performing the solutions provided in embodiments of this application, and the processor 401 controls the execution of the computer-executable instructions. The processor 401 is configured to execute the computer-executable instructions stored in the memory 403, to implement the methods provided in the following embodiments of this application. Alternatively, optionally, in this embodiment of this application, the processor 401 may perform processing-related functions in a method provided in the following embodiments of this application, and the communication interface 404 is responsible for communication with another device or a communication network. This is not specifically limited in this embodiment of this application.

Optionally, the computer-executable instructions in this embodiment of this application may also be referred to as application program code. This is not specifically limited in this embodiment of this application.

The coupling in this embodiment of this application may be an indirect coupling or a communication connection between apparatuses, units, or modules in an electrical form, a mechanical form, or another form, and is used for information exchange between the apparatuses, the units, or the modules.

In an embodiment, the processor 401 may include one or more CPUs, for example, a CPU 0 and a CPU 1 in FIG. 4.

In an embodiment, the communication apparatus 40 may include a plurality of processors, for example, the processor 401 and a processor 407 in FIG. 4. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 40 may further include an output device 405 and/or an input device 406. The output device 405 is coupled to the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 is coupled to the processor 401, and may receive an input from a user in a plurality of manners. For example, the input device 406 may be a mouse, a keyboard, a touchscreen device, or a sensor device.

It may be understood that the composition structure shown in FIG. 4 does not constitute a limitation on the communication apparatus. In addition to the components shown in FIG. 4, the communication apparatus may include more or fewer components than those shown in the figure, or some components may be combined, or different component arrangements may be used.

The following describes the communication method in the embodiments of this application with reference to the accompanying drawings. Network elements in the following embodiments may have components shown in FIG. 4. Details are not described again.

It should be noted that the communication method provided in embodiments of this application may be applied to a plurality of fields, for example, the unmanned driving field, the self-driving field, the assisted driving field, the smart driving field, the internet of vehicles field, the smart internet of vehicles field, and the vehicle sharing field.

It should be noted that, in the following embodiments of this application, a name of a message between nodes, a name of each parameter in the message, or the like is merely an example, and may alternatively be another name during specific implementation. This is not specifically limited in the embodiments of this application.

It should be noted that in embodiments of this application, "and/or" may indicate that there are three relationships between associated objects. For example, A and/or B may represent three cases: only A exists, both A and B exist, and only B exists. A and B can be singular or plural. In addition, expressions similar to "one or more of A, B, and C" or "one or more of A, B, or C" generally indicate any one of the following: Only A exists, only B exists, both A and B exist, both A and C exist, both B and C exist, and all of A, B, and C exist. The foregoing uses a total of three elements A, B, and C as an example to describe optional items of this item. When there are more elements in the expression, a meaning of the expression may be obtained according to the foregoing rules.

To facilitate description of the technical solutions in embodiments of this application, in embodiments of this application, terms such as "first" and "second" may be used to distinguish between technical features having same or similar functions. The terms such as "first" and "second" do not limit a quantity and an execution sequence, and the terms such as "first" and "second" do not indicate a definite difference. In embodiments of this application, a term such as "example" or "for example" indicates an example, an illustration, or a description. Any embodiment or design scheme described as an "example" or "for example" should not be explained as being more preferred or having more advantages than another embodiment or design scheme. Use of the term such as "example" or "for example" is intended to present a relative concept in a specific manner for ease of understanding.

It should be noted that in embodiments of this application, for a technical feature, "first", "second", "third", "A", "B", "C", and "D" are used to distinguish between technical features in the technical feature, and there is no sequential order or size order between the technical features described by "first", "second", "third", "A", "B", "C", and "D".

It may be understood that a same step or a step or a technical feature having a same function in embodiments of this application may be mutually referenced in different embodiments.

It may be understood that, in the embodiments of this application, the first node or the second node may perform some or all of steps in embodiments of this application. These steps are merely examples. In embodiments of this application, other steps or variations of various steps may be alternatively performed. In addition, the steps may be performed in a sequence different from a sequence presented in embodiments of this application, and not all the steps in embodiments of this application need to be performed.

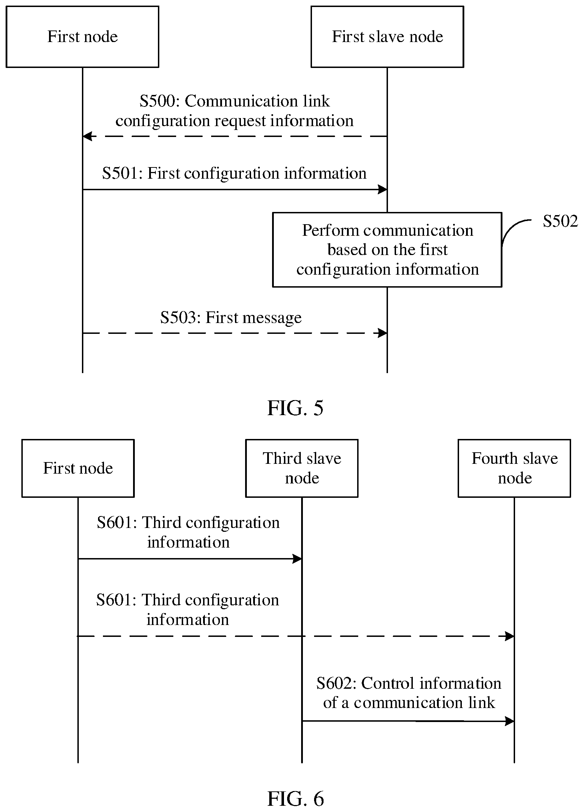

FIG. 5 shows a communication method according to an embodiment of this application. The communication method includes S501 and S502.

S501: A first node sends first configuration information to a first slave node on a first frequency hopping channel. Correspondingly, the first slave node receives the first configuration information from the first node on the first frequency hopping channel.

The first node may be a master node of the first slave node, and the first slave node is a slave node of the first node. That is, the first node may send the first configuration information to the slave node of the first node on the first frequency hopping channel. For example, the communication system 30 shown in FIG. 3A is used as an example, and the first node may be the master node 301 in the communication system 30. The first slave node may be the slave node 302, the slave node 303, or the slave node 304.

The first frequency hopping channel may be a general frequency hopping channel, so as to avoid congestion of a broadcast-dedicated frequency hopping channel caused by using the broadcast-dedicated frequency hopping channel by the first node. For descriptions of the frequency hopping and the frequency hopping channel, refer to the foregoing descriptions of technical terms in embodiments of this application. Details are not described herein again.

In a possible implementation, the first frequency hopping channel is configured by the first node or another node before S501, and is used for a communication link between the first node and the first slave node, or is used to carry a communication message between the first node and the first slave node.

The first configuration information may be used to configure a communication link between the first slave node and another slave node. The another slave node may be a slave node of the first node, or may not be a slave node of the first node. In other words, the first configuration information may be used to configure a communication link between at least two second nodes. The at least two second nodes include a first slave node, and the another slave node is a node other than the first slave node in the at least two second nodes. All the at least two second nodes may be slave nodes of the first node. Alternatively, some nodes of the at least two second nodes are slave nodes of the first node, and the other nodes of the at least two second nodes are not slave nodes of the first node. A quantity of the other slave nodes is not limited in this embodiment of this application. The communication link between the at least two second nodes includes a direct link between the at least two second nodes, that is, a direct link between the first slave node and another slave node. The direct link may include one or more of the following direct links: a point-to-point direct link, a point-to-multipoint direct link, or a multipoint-to-multipoint direct link. For descriptions of the point-to-point direct link, the point-to-multipoint direct link, and the multipoint-to-multipoint direct link, refer to the foregoing description of technical terms in embodiments of this application. Details are not described herein again.

In a possible implementation, the first node may be a master node of at least one of the plurality of second nodes corresponding to the direct link, or the first node is a master node of the plurality of second nodes corresponding to the direct link.

For example, if the at least two second nodes include the first slave node, a slave node 2, and a slave node 3, the direct link between the at least two second nodes may include one or more of the following direct links: a direct link between the first slave node and the slave node 2, a direct link between the first slave node and the slave node 3, and a direct link between the first slave node, the slave node 2, and the slave node 3. The first node may be a master node of one or more nodes of the first slave node, the slave node 2, and the slave node 3. For example, for the direct link between the first slave node and the slave node 2, the first node is a master node of at least one of the first slave node and the slave node 2 corresponding to the direct link. For a direct link between the first slave node, the slave node 2, and the slave node 3, the first node is a master node of at least one of the first slave node, the slave node 2, and the slave node 3 corresponding to the direct link.

It may be understood that, if the another slave node is a slave node of the first node, the first node may also send, to the another slave node, configuration information used to configure a communication link between the first slave node and the another slave node. The configuration information may be sent by the first node in a unicast manner, or may be sent by the first node in a multicast manner.

For example, the another slave node is the second slave node, and the configuration information is sent by the first node in a unicast manner. The first node may send the first configuration information to the first slave node on the first frequency hopping channel, and send second configuration information to the second slave node on a second frequency hopping channel. That is, the first node may separately send configuration information to the first slave node and the second slave node, to configure the communication link between the first slave node and the second slave node. The second frequency hopping channel is a general frequency hopping channel. The second frequency hopping channel is configured by the first node or the another node before the first node sends the second configuration information, and is used for a communication link between the first node and the second slave node, or is used to carry a message for communication between the first node and the second slave node. The first frequency hopping channel and the second frequency hopping channel may be the same or different. For description of the second configuration information, refer to the following description of the first configuration information. The second configuration information and the first configuration information may be the same or different.

In this embodiment of this application, that the second configuration information is different from the first configuration information means that content included in the second configuration information is different from content included in the first configuration information. For example, when both the first configuration information and the second configuration information include a node identifier, a node identifier included in the second configuration information is different from a node identifier included in the first configuration information. Specifically, the node identifier included in the second configuration information is an identifier of the first slave node in the at least two second nodes, and the node identifier included in the first configuration information is an identifier of the second slave node in the at least two second nodes.

For example, the first slave node and the another slave node are included in the second node group, the configuration information is sent by the first node in a multicast manner, and the first node sends the first configuration information to the second node group on the first frequency hopping channel. It may be understood that before sending the first configuration information, the at least two second nodes may first form the second node group, and optionally, establish a multicast link between the first node and the second node group, and then send the first configuration information in the multicast link. A manner of forming the second node group and establishing the multicast link may be pre-configuration, or may be configured by the first node. This is not limited in this application.

Optionally, before S501, the first node generates or obtains the first configuration information. For example, the first node generates or obtains the first configuration information based on a status of a current channel. For another example, the first node generates or obtains the first configuration information based on the communication link configuration request information described subsequently in S500.

In a possible implementation, the first configuration information includes one or more of the following: an identifier of the first communication link, an identifier of the first communication link group, a node identifier, type information of the first communication link, type information of a communication link in the first communication link group, first time domain resource information, or frequency hopping channel indication information.

Content included in the first configuration information is described in detail below.

### 1. Identifier of the first communication link and identifier of the first communication link group

The identifier of the first communication link or the identifier of the first communication link group may be used for link identification. For example, the identifier of the first communication link is used to identify the first communication link, and the identifier of the first communication link group is used to identify a link in the first communication link group.

In an example, in a subsequent process of communication between at least two second nodes, after a second node receives a direct communication message, it may be determined, based on whether the direct communication message includes the identifier of the first communication link or the identifier of the first communication link group, whether the direct communication message is a message transmitted in the first communication link or the first communication link group.

In a design, the identifier of the first communication link or the identifier of the first communication link group may alternatively be used as a frequency hopping randomization seed of the first communication link or the first communication link group. For example, the identifier of the first communication link is used as the frequency hopping randomization seed of the first communication link. In a subsequent process of communication between the at least two second nodes, before a second node sends or receives a direct communication message by using the first communication link, a frequency hopping channel on which the direct communication message is sent or received by using the first communication link may be determined based on the identifier of the first communication link and time domain resource information of the first communication link by using a predefined frequency hopping algorithm.

The first communication link is a communication link between two second nodes of the at least two second nodes. The first communication link group includes a plurality of communication links between the at least two second nodes. The first communication link or the first communication link group is included in the communication link between the at least two second nodes. For specific descriptions of the communication link and the communication link group, refer to the foregoing descriptions of technical terms in embodiments of this application. Details are not described herein again.

It may be understood that, if the first communication link is configured in the first configuration information, the first configuration information may include the identifier of the first communication link; or if the first communication link group is configured in the first configuration information, the first configuration information may include the identifier of the first communication link group.

### 2. Node identifier

The node identifier may be used to identify at least one node in the at least two second nodes, and does not relate a node other than the at least two second nodes. Therefore, the identifier may be short. Subsequently, the identifier indicates the node in a direct communication message and/or link configuration/reconfiguration or other link management signaling. This helps shorten a length of the message/signaling.

In an example, the node identifier may include an identifier of the first slave node in the at least two second nodes, and/or an identifier of a node other than the first slave node in the at least two second nodes in the at least two second nodes.

It may be understood that, after receiving the node identifier, the first slave node may determine the identifier of the first slave node in the at least two second nodes, and/or determine the identifier of the node other than the first slave node in the at least two second nodes in the at least two second nodes, so that the first slave node subsequently communicates with a node other than the first slave node in the at least two second nodes.

### 3. Type information of the first communication link and type information of the communication link in the first communication link group

The type information of the first communication link may indicate a type of the first communication link. The type information of the communication link in the first communication link group may indicate a type of the communication link in the first communication link group. For description of the type of the first communication link or the type of the communication link in the first communication link group, refer to the foregoing description of the type of the communication link. Details are not described herein again.

It may be understood that if the first communication link is configured in the first configuration information, the first configuration information may include the type information of the first communication link. After receiving the type information of the first communication link, the first slave node may communicate with a node other than the first slave node in the at least two second nodes based on the type of the first communication link. If the first communication link group is configured in the first configuration information, the first configuration information may include the type information of the communication link in the first communication link group. After receiving the type information of the communication link in the first communication link group, the first slave node may communicate with a node other than the first slave node in the at least two second nodes based on the type of the communication link in the first communication link group.

### 4. First time domain resource information

The first time domain resource information indicates a time domain resource of a communication link that is configured in the first configuration information. The time domain resource of the communication link includes at least one transmission opportunity group. All of the at least one transmission opportunity group are continuous in time domain. Specifically, for a description of the transmission opportunity group, refer to the foregoing description of technical terms in embodiments of this application.

In a possible implementation, the first time domain resource information includes one or more of the following: period information of the transmission opportunity group, first time length information, or information about a first start location.

The period information of the transmission opportunity group may indicate a period of a transmission opportunity group in the at least one transmission opportunity group, that is, a time unit of an interval between two neighboring transmission opportunity groups in the at least one transmission opportunity group. The transmission opportunity group shown in FIG. 2A is used as an example. The at least one transmission opportunity group includes the transmission opportunity group 201, the transmission opportunity group 202, and the transmission opportunity group 203, and a transmission opportunity group period of the at least one transmission opportunity group is 60 ms.

The first time length information includes information indicating a time domain length of a first transmission opportunity group in the at least one transmission opportunity group. The first transmission opportunity group is included in the at least one transmission opportunity group. In other words, the first time length information may indicate a time domain length of one or more transmission opportunity groups in the at least one transmission opportunity group.

It may be understood that if the time domain lengths of the transmission opportunity groups in the at least one transmission opportunity group are the same or the transmission opportunity groups in the at least one transmission opportunity group are periodic, the first time length information may indicate one time domain length. If the time domain lengths of transmission opportunity groups in the at least one transmission opportunity group are different or the transmission opportunity groups in the at least one transmission opportunity group are not periodic, the first time length information may indicate a plurality of time domain lengths. The plurality of time domain lengths are time domain lengths of different transmission opportunity groups in the at least one transmission opportunity group.

For example, the at least one transmission opportunity group includes a transmission opportunity group 1, a transmission opportunity group 2, and a transmission opportunity group 3. If a time domain length of the transmission opportunity group 1, a time domain length of the transmission opportunity group 2, and a time domain length of the transmission opportunity group 3 are all 10 ms, the first time length information may indicate 10 ms. If the time domain length of the transmission opportunity group 1 is 10 ms, the time domain length of the transmission opportunity group 2 is 12 ms, and the time domain length of the transmission opportunity group 3 is 14 ms, the first time length information may indicate 10 ms, 12 ms, and 14 ms.

The information about the first start location includes information indicating a time domain start location of a second transmission opportunity group in at least one transmission opportunity group. The second transmission opportunity group is included in the at least one transmission opportunity group. That is, the information about the first start location may indicate a time domain start location of one or more transmission opportunity groups in the at least one transmission opportunity group.

It may be understood that if the transmission opportunity groups in the at least one transmission opportunity group are periodic, the information about the first start location may indicate a time domain start location of one of the at least one transmission opportunity group. After receiving the information about the first start location, the first slave node may determine the time domain start locations of all of the at least one transmission opportunity group based on the information about the first start location and the transmission opportunity group period. If the transmission opportunity groups in the at least one transmission opportunity group are not periodic, the information about the first start location may indicate time domain start locations of all of the at least one transmission opportunity group.

In an example, if the transmission opportunity groups in the at least one transmission opportunity group are periodic, the information about the first start location includes a time unit of an interval between the first transmission opportunity group in the at least one transmission opportunity group and a reference time domain location. If the transmission opportunity groups in the at least one transmission opportunity group are not periodic, the information about the first start location includes a time unit of an interval between each of the at least one transmission opportunity group and the reference time domain location. The reference time domain location may be preconfigured or predefined, or may be configured by the first node. For example, the reference time domain location may be a time domain location of the first configuration information.

In a possible implementation, the transmission opportunity group includes the at least one transmission opportunity. The transmission opportunity may be used by the second node to send at least one direct communication message and/or receive at least one direct communication message. If the time domain resource of the communication link includes at least two transmission opportunities, in different transmission opportunities, a same sequence of resources used for the second node to send the at least one direct communication message and/or receive the at least one direct communication message is configured, where the resource sequence may be configured by the first node, or may be predefined. Specifically, for a description of the transmission opportunity, refer to the foregoing description of technical terms in embodiments of this application.

In a possible implementation, the first time domain resource information further includes one or more of the following: quantity information of the transmission opportunities, second time length information, or information about a second start location.

The quantity information of the transmission opportunities includes a quantity of transmission opportunities in a third transmission opportunity group in the at least one transmission opportunity group. The third transmission opportunity group is included in the at least one transmission opportunity group. That is, the quantity information of the transmission opportunities may indicate a quantity of transmission opportunities in one or more transmission opportunity groups in the at least one transmission opportunity group.

It may be understood that if a quantity of transmission opportunities in different transmission opportunity groups in the at least one transmission opportunity group is the same, the quantity information of the transmission opportunities may indicate a quantity of transmission opportunities in one transmission opportunity group. If quantities of transmission opportunities in different transmission opportunity groups in the at least one transmission opportunity group are different, the quantity information of the transmission opportunities may indicate a quantity of transmission opportunities in each of the at least one transmission opportunity group.

The second time length information includes a time domain length of a first transmission opportunity of the at least one transmission opportunity. The first transmission opportunity is included in the at least one transmission opportunity. In other words, the second time length information may indicate a time domain length of one or more transmission opportunities in the at least one transmission opportunity.

It may be understood that if time domain lengths of transmission opportunities in the at least one transmission opportunity are the same or transmission opportunities in the at least one transmission opportunity are periodic, the second time length information may indicate one time domain length. If time domain lengths of transmission opportunities in the at least one transmission opportunity are different or transmission opportunities in the at least one transmission opportunity are not periodic, the second time length information may indicate a plurality of time domain lengths, and the plurality of time domain lengths are respectively time domain lengths of different transmission opportunities in the at least one transmission opportunity.

For example, the at least one transmission opportunity includes a transmission opportunity 1, a transmission opportunity 2, and a transmission opportunity 3. If a time domain length of the transmission opportunity 1, a time domain length of the transmission opportunity 2, and a time domain length of the transmission opportunity 3 are all five slots, the second time length information may indicate five slots. If the time domain length of the transmission opportunity 1 is five slots, the time domain length of the transmission opportunity 2 is four slots, and the time domain length of the transmission opportunity 3 is six slots, the second time length information may indicate five slots, four slots, and six slots.

The information about the second start location includes a time domain start location used to send or receive one direct communication message in a second transmission opportunity of the at least one transmission opportunity. The second transmission opportunity is included in the at least one transmission opportunity. In other words, the information about the second start location may indicate a time domain start location of sending or receiving one direct communication message in one or more of the at least one transmission opportunity.

It may be understood that if the transmission opportunities in the at least one transmission opportunity are periodic, the information about the second start location may indicate a time domain start location of sending or receiving a direct communication message in one of the at least one transmission opportunity. After receiving the information about the second start location, the first slave node may determine, based on the information about the second start location, the quantity information of the transmission opportunities, and the second time length information, a time domain start location of sending or receiving a direct communication message each time in each of the at least one transmission opportunity. If the transmission opportunities in the at least one transmission opportunity are not periodic, the information about the second start location may indicate a time domain start location of sending or receiving a direct communication message in each of the at least one transmission opportunity.

In an example, if the transmission opportunities in the at least one transmission opportunity are periodic, the information about the second start location includes a time unit of an interval between a reference time domain location and a time domain location of sending or receiving a direct communication message for the first time in one of the at least one transmission opportunity. If the transmission opportunities in the at least one transmission opportunity are not periodic, the information about the second start location includes a time unit of an interval between a time domain start location and a reference time domain location of sending or receiving one direct communication message for the first time in each of the at least one transmission opportunity. The reference time domain location may be preconfigured or predefined, or may be configured by the first node. For example, the reference time domain location may be a time domain location of the first configuration information.

In this embodiment of this application, the first transmission opportunity group, the second transmission opportunity group, and the third transmission opportunity group are the same or different. The first transmission opportunity is the same as or different from the second transmission opportunity.

It may be understood that information (for example, period information of the transmission opportunity group, first time length information, information about the first start location, quantity information of the transmission opportunities, a second time length, or information about the second start location) included in the first time domain resource information may be predefined (for example, defined in a protocol) or configured by using another message. This is not limited.

### 5. Frequency hopping channel indication information

The frequency hopping channel indication information indicates an available frequency hopping channel of the communication link configured in the first configuration information. The available frequency hopping channel is a frequency hopping channel that can be used for the communication link. The frequency hopping channel may represent a frequency domain resource. For specific descriptions, refer to the foregoing descriptions of technical terms in embodiments of this application.

In an example, the frequency hopping channel indication information includes identifiers of frequencies corresponding to at least two available frequency hopping channels. Alternatively, the frequency hopping channel indication information includes an identifier of a frequency corresponding to an unavailable frequency hopping channel. The unavailable frequency hopping channel is a frequency hopping channel that cannot be used for the communication link. In this case, the first slave node may determine the available frequency hopping channel based on the configured frequency hopping channel list and the frequency hopping channel indication information. The frequency hopping channel list may indicate a plurality of frequencies. The frequency hopping channel list is preset (for example, defined in a protocol) or configured by the first node. For example, the frequency hopping channel list indicates a frequency 1, a frequency 2, and a frequency 3. If the frequency hopping channel indication information includes an identifier of the frequency 1, the available frequency hopping channels are the frequency hopping channel corresponding to the frequency 2 and the frequency hopping channel corresponding to the frequency 3.

In another example, the frequency hopping channel indication information includes N bits. Each of the N bits corresponds to one frequency hopping channel, and indicates whether the frequency hopping channel is available. For example, if a value of a bit in the N bits is 0, it indicates that a frequency hopping channel corresponding to the bit is unavailable; if a value of the bit is 1, it indicates that a frequency hopping channel corresponding to the bit is available, and vice versa. For example, the frequency hopping channel indication information includes four bits, where a first bit corresponds to a frequency hopping channel 1, a second bit corresponds to a frequency hopping channel 2, a third bit corresponds to a frequency hopping channel 3, and a fourth bit corresponds to a frequency hopping channel 4. If values of the four bits are "0101", it indicates that the frequency hopping channel 1 and the frequency hopping channel 3 are unavailable frequency hopping channels, and the frequency hopping channel 2 and the frequency hopping channel 4 are available frequency hopping channels.

S502: The first slave node performs communication based on the first configuration information.

In a possible implementation, the first slave node communicates with another slave node in the time domain resource and the available frequency hopping channel that are configured in the first configuration information.

It may be understood that, usually, there are plurality of available frequency hopping channels indicated by the foregoing frequency hopping channel indication information, and the first slave node may determine one frequency hopping channel from the plurality of available frequency hopping channels according to a specific rule, and communicate with another slave node on the frequency hopping channel. Subsequently, with time, the first slave node may further determine a new frequency hopping channel according to the rule, and communicate with another slave node on the new frequency hopping channel. For details, refer to the foregoing descriptions of the frequency hopping and the frequency hopping channel. Details are not described herein again.

According to the method shown in FIG. 5, the first node may communicate on the first frequency hopping channel by using the communication link between the first node and the first slave node, and configure a communication link between the first slave node and the another slave node, so that the first slave node can perform direct communication with the another slave node based on a configuration of the first node. This avoids a conflict between a resource of the direct link and a resource of the master and slave communication link, and improves communication performance. In addition, in the method shown in FIG. 5, all resources in a communication domain are managed and maintained by the master node, and the slave node does not need to configure the resource of the direct link, so that complexity of the slave node and power consumption of the slave node can be reduced.

Optionally, in a possible implementation of the method shown in FIG. 5, the first configuration information is semi-static configuration information, and is used to configure a potentially available resource of the communication link. These potentially available resources may not all be used for communication links between the first slave node and other slave nodes. That is, although the first node configures the at least one transmission opportunity group (or the at least one transmission opportunity) for the first slave node, not every transmission opportunity group (or not every transmission opportunity) may be used for a communication link between the first slave node and another slave node. In this case, the first node may indicate, to the first slave node by using the first message, that a transmission opportunity group (or a transmission opportunity) can be used for a communication link between the first slave node and the another slave node. In the foregoing process, the first node may flexibly adjust a resource usage manner based on a change of a transmission and a communication requirement of the master and slave communication link and/or the direct link, so that the resource can be more dynamically allocated to different links. For example, the method shown in FIG. 5 may further include S503.

S503: The first node sends the first message to the first slave node. Correspondingly, the first slave node receives the first message from the first node

The first message may indicate that a fourth transmission opportunity group is used for the foregoing communication link. In this way, after receiving the first message, the first slave node may determine, based on the first message, that the fourth transmission opportunity group can be used for the foregoing communication link. Alternatively, the first message may indicate that a third transmission opportunity is used for the communication link. In this way, after receiving the first message, the first slave node may determine, based on the first message, that the third transmission opportunity can be used for the foregoing communication link.

The fourth transmission opportunity group is included in the time domain resource of the communication link, or the fourth transmission opportunity group is included in the at least one transmission opportunity group. The third transmission opportunity is included in the time domain resource of the communication link, or the third transmission opportunity is included in the at least one transmission opportunity.

In an example, if the first message indicates that the fourth transmission opportunity group is used for the foregoing communication link, the first node starts to send the first message at a time domain start location of the fourth transmission opportunity group, or sends the first message in a time domain resource that is before the fourth transmission opportunity group and that is adjacent to the fourth transmission opportunity group. There is no resource used to transmit another message between the fourth transmission opportunity group and the time domain resource that is before the fourth transmission opportunity group and that is adjacent to the fourth transmission opportunity group.

In another example, if the first message indicates that the third transmission opportunity is used for the communication link, the first node starts to send the first message at a time domain start location of the third transmission opportunity, or sends the first message in a time domain resource that is before the third transmission opportunity and that is adjacent to the third transmission opportunity. There is no resource used to transmit another message between the third transmission opportunity and the time domain resource that is before the third transmission opportunity and that is adjacent to the third transmission opportunity.

In a design, if the first slave node does not receive the first message, the first slave node does not use the fourth transmission opportunity group or the third transmission opportunity to communicate with the another slave node.

In still another design, after receiving the first message, the first slave node synchronizes with the another slave node based on the first message. In other words, the first message may be further used for synchronization between the first slave node and the another slave node, or the first message may be used as a timing reference between the first slave node and the another slave node. For example, the first message may include a synchronization signal. After receiving the first message, the first slave node and the another slave node may perform time-frequency synchronization based on the synchronization signal. A sending time of the first message is close to a time at which the first slave node or the another slave node sends and/or receives a message in the fourth transmission opportunity group or the third transmission opportunity. Therefore, when the first slave node or the another slave node sends and/or receives a message in the fourth transmission opportunity group or the third transmission opportunity, a clock drift is small and a synchronization effect is good.

Optionally, the first node sends a second message to the first slave node. Correspondingly, the first slave node receives the second message from the first node. The second message may indicate that a fifth transmission opportunity group is not used for the foregoing communication link. In this way, after receiving the second message, the first slave node may determine, based on the second message, that the fifth transmission opportunity group cannot be used for the foregoing communication link. Alternatively, the second message may indicate that the fourth transmission opportunity is not used for the foregoing communication link. In this way, after receiving the second message, the first slave node may determine, based on the second message, that the fourth transmission opportunity cannot be used for the foregoing communication link.

The fifth transmission opportunity group is included in the time domain resource of the communication link, or the fifth transmission opportunity group is included in the at least one transmission opportunity group. The fourth transmission opportunity is included in the time domain resource of the communication link, or the fourth transmission opportunity is included in the at least one transmission opportunity.

In an example, if the second message indicates that the fifth transmission opportunity group is not used for the foregoing communication link, the first node starts to send the second message from a time domain start location of the fifth transmission opportunity group, or sends the second message in a time domain resource that is before the fifth transmission opportunity group and that is adjacent to the fifth transmission opportunity group. There is no resource used to transmit another message between the fifth transmission opportunity group and the time domain resource that is before the fifth transmission opportunity group and that is adjacent to the fifth transmission opportunity group.

In another example, if the second message indicates that the fourth transmission opportunity is not used for the communication link, the first node starts to send the second message from a time domain start location of the fourth transmission opportunity, or sends the second message in a time domain resource that is before the fourth transmission opportunity and that is adjacent to the fourth transmission opportunity. There is no resource used to transmit another message between the fourth transmission opportunity and the time domain resource that is before the fourth transmission opportunity and that is adjacent to the fourth transmission opportunity.

Optionally, in a possible implementation of the method shown in FIG. 5, the first slave node may send communication link configuration request information to the first node, so that the first node can properly configure a communication link for the first slave node based on the communication link configuration request information, so as to make full use of resources and avoid a conflict. For example, the method shown in FIG. 5 may further include S500.

S500: The first slave node sends communication link configuration request information to the first node. Correspondingly, the first node receives the communication link configuration request information from the first slave node.

The communication link configuration request information may be used to request to configure the communication link.

In a possible implementation, the communication link configuration request information includes one or more of the following: link type information of the communication link, indication information of the at least two second nodes, period information of the communication link, delay requirement information of the communication link, traffic volume information of the communication link, or resource requirement information of the communication link.

The link type information of the communication link may indicate a type of the communication link. For description of the type of the communication link, refer to the foregoing description of technical terms in embodiments of this application. The indication information of the at least two second nodes may indicate the at least two second nodes, and the at least two second nodes include nodes corresponding to the communication link. The period information of the communication link may indicate a period of a resource requirement of the communication link. The delay requirement information of the communication link may indicate a delay requirement of the communication link. The traffic volume information of the communication link may indicate the traffic volume of the communication link. The resource requirement information of the communication link may indicate a resource requirement of the communication link, for example, a quantity of time units required by the communication link or a length of a time unit.

It may be understood that the foregoing communication link configuration request information is requested by the first slave node from the first node, or the first slave node indicates, to the first node, information required by the first slave node. After receiving the communication link configuration request information, the first configuration information sent by the first node to the first slave node may be configured based on information in the communication link configuration request information, or may not be configured based on information in the communication link configuration request information. This is not limited.

Actions of the first node or the first slave node in S500 to S503 may be performed by the processor 401 in the communication apparatus 40 shown in FIG. 4 by invoking the application program code stored in the memory 403. This is not limited in this embodiment of this application.

In the method shown in FIG. 5, the communication link between the at least two second nodes is configured by the first node. In a specific application, the first node may alternatively determine one node from the at least two second nodes, and a communication link between the at least two second nodes may alternatively be configured by a node determined by the first node. In this way, complexity of managing a resource by the first node can be reduced.

FIG. 6 shows still another communication method according to an embodiment of this application. The communication method includes S601 and S602.

S601: A first node sends third configuration information to a third slave node. Correspondingly, the third slave node receives the third configuration information from the first node.

The first node may be a master node of the third slave node, and the third slave node is a slave node of the first node. The third slave node is a node in the at least two second nodes. The third slave node is a control node in the at least two second nodes, and may send the control information of the communication link to a node other than the third slave node in the at least two second nodes. In this embodiment of this application, the third slave node may be referred to as a node that manages the slave node. That is, the third slave node may manage the at least two second nodes, for example, configure a communication link between the at least two second nodes.

For example, the communication system 30 shown in FIG. 3A is used as an example, and the first node may be the master node 301 in the communication system 30. The at least two second nodes include at least two of the slave node 302, the slave node 303, or the slave node 304. If the at least two second nodes include the slave node 302 and the slave node 303, the third slave node may be the slave node 302 or the slave node 303. If the at least two second nodes include the slave node 302 and the slave node 304, the third slave node may be the slave node 302 or the slave node 304. If the at least two second nodes include the slave node 303 and the slave node 304, the third slave node may be the slave node 303 or the slave node 304. If the at least two second nodes include the slave node 302, the slave node 303, and the slave node 304, the third slave node may be the slave node 302, the slave node 303, or the slave node 304.

In a possible implementation, the third configuration information includes indication information of the third slave node and/or indication information of the first resource. The indication information of the third slave node may indicate the third slave node. For example, the indication information of the third slave node includes an identifier of the third slave node. The first resource may be used to carry control information of the communication link from the control node. The communication link is a communication link between the at least two second nodes. For a description of the communication link, refer to the corresponding description in S501. Details are not described herein again. The control information of the communication link may be used to configure a communication link between the at least two second nodes. The communication link includes a direct link between the at least two second nodes.

Optionally, the first node may further send third configuration information to a node (for example, a fourth slave node) other than the third slave node in the at least two second nodes, to indicate the third slave node and the first resource to these nodes. Alternatively, after receiving the third configuration information, the third slave node may use a second communication link or a second communication link group between the third slave node and a node other than the third slave node in the at least two second nodes, to send the third configuration information to a node (for example, a fourth slave node) other than the third slave node in the at least two second nodes. The second communication link or the second communication link group may be configured by the first node, the third slave node, or another node before the third slave node sends the third configuration information. Subsequently, a node other than the third slave node in the at least two second nodes may receive, on the first resource, the control information of the communication link from the third slave node.

In a possible implementation, the first node or the third slave node may send the third configuration information in a unicast or multicast manner.

S602: The third slave node sends the control information of the communication link on the first resource.

In a possible implementation, the third slave node generates or obtains the control information of the communication link, and sends the control information of the communication link to a second node (for example, the fourth slave node) other than the third slave node in the at least two second nodes on the first resource.

In a possible implementation, the control information of the communication link includes one or more of the following: an identifier of the first communication link, an identifier of the first communication link group, a node identifier, type information of the first communication link, type information of a communication link in the first communication link group, first time domain resource information, or frequency hopping channel indication information. For details, refer to the description of the first configuration information in the method shown in FIG. 5. Details are not described herein again. That is, different from the method shown in FIG. 5, in the method shown in FIG. 6, the communication link between the at least two second nodes is configured by the third slave node.

It may be understood that, before S602, a resource may be preconfigured, for the third slave node to configure a communication link between the at least two second nodes. The resource may be configured by the first node or defined in a protocol. This is not limited. In this way, a conflict between a resource configured by the third slave node and a resource configured by the another node can be avoided.

Optionally, after S602, the third slave node sends a third message to a node other than the third slave node in the at least two second nodes, to indicate that a transmission opportunity group or a transmission opportunity in a time domain resource configured by using the control information of the communication link may be used for the communication link. For details, refer to the corresponding description in S503. Details are not described herein again.

According to the method shown in FIG. 6, the first node may configure the third slave node that has a specific direct link management or configuration function and a resource for sending corresponding management signaling (for example, the control information of the communication link), so that the third slave node may manage or configure a communication link between the at least two second nodes. For example, the third slave node may allocate a resource to a communication link between the at least two second nodes in a resource allocated to the at least two second nodes, to avoid a resource conflict and improve communication performance. In addition, compared with that in the method shown in FIG. 5, after the first node determines the third slave node, the communication link between the at least two second nodes may be configured by the third slave node, and does not need to be configured by the first node. This reduces complexity of resource management by the first node. In the method shown in FIG. 6, the direct link is managed by the node that uses the direct link for communication, so that dependency of the slave node on the master node and the master and slave link can be reduced, and resource configuration flexibility and independence of the direct link can be improved.

Actions of the first node or the third slave node in S601 and S602 may be performed by the processor 401 in the communication apparatus 40 shown in FIG. 4 by invoking the application program code stored in the memory 403. This is not limited in this embodiment of this application.

It may be understood that the method shown in FIG. 5 and the method shown in FIG. 6 may be mutually combined. For example, in the communication method provided in this embodiment of this application, S501 and S502 may be performed first, and then S601 and S602 may be performed. In other words, the first node may first configure a communication link between the at least two second nodes. Subsequently, after the first node determines the third slave node, the third slave node may configure the communication link between the at least two second nodes. It may be understood that, in an embodiment in which the method shown in FIG. 5 is combined with the method shown in FIG. 6, the first slave node and the third slave node may be the same or may be different. The communication link between the at least two second nodes configured by the first node may be the same as or different from the communication link between the at least two second nodes configured by the third slave node. For example, the first time domain resource information and/or the frequency hopping channel indication information included in the first configuration information in S501 is different from the first time domain resource information and/or the frequency hopping channel indication information included in the control information of the communication link in S602.

It may be understood that in the foregoing embodiments, the method and/or the steps implemented by the first node may alternatively be implemented by a component (for example, a chip or a circuit) used to the first node. The method and/or step implemented by the first slave node may alternatively be implemented by a component (for example, a chip or a circuit) used for the first slave node. The method and/or step implemented by the third slave node may alternatively be implemented by a component (for example, a chip or a circuit) used to the third slave node.

The foregoing mainly describes the solutions provided in embodiments of this application from a perspective of interaction between nodes. Correspondingly, an embodiment of this application further provides a communication apparatus. The communication apparatus may be the first node in the foregoing method embodiment, an apparatus including the foregoing first node, or a component that can be used for the first node. Alternatively, the communication apparatus may be the first slave node in the foregoing method embodiment, or an apparatus including the first slave node, or a component that can be used for the first slave node. Alternatively, the communication apparatus may be the third slave node in the foregoing method embodiment, or an apparatus including the foregoing third slave node, or a component that can be used for the third slave node. It may be understood that, to implement the foregoing functions, the first node, the first slave node, the third slave node, or the like includes a corresponding hardware structure and/or software module for performing each function. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this embodiment of this application, function module division may be performed on the first node, the first slave node, or the third slave node based on the foregoing method example. For example, each function module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

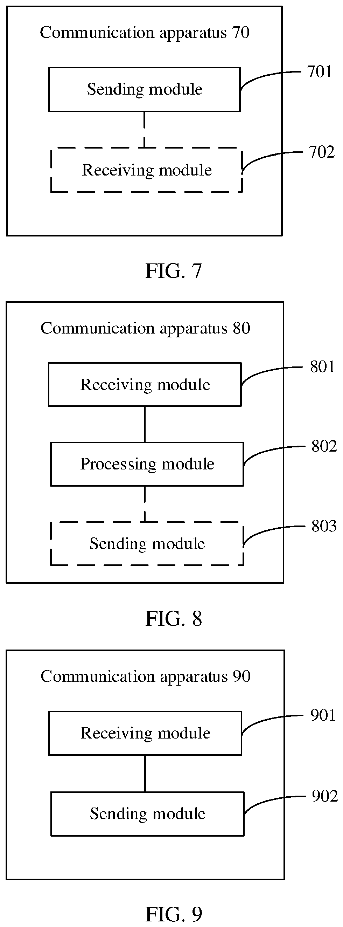

For example, when each functional module is obtained through division in an integrated manner, FIG. 7 is a schematic diagram of a structure of a communication apparatus 70. The communication apparatus 70 includes a sending module 701. The sending module 701, also known as a sending unit, is configured to implement a sending function, and may be, for example, a sending circuit, a transmitter machine, a transmitter, or a communication interface. Optionally, the communication apparatus 70 further includes a receiving module 702. The receiving module 702, also known as a receiving unit, is configured to implement a receiving function, and may be, for example, a receiving circuit, a receiver machine, a receiver, or a communication interface.

For example, the communication apparatus 70 is configured to implement a function of the first node. The communication apparatus 70 is, for example, the first node in the embodiment shown in FIG. 5 or the embodiment shown in FIG. 6.

The sending module 701 is configured to send first configuration information on a first frequency hopping channel. The first configuration information is used to configure a communication link between the at least two second nodes. The communication link includes a direct link between the at least two second nodes. The first node corresponding to the communication apparatus 70 is a master node of at least one second node in the two second nodes corresponding to the direct link. That the communication apparatus 70 corresponds to the first node may be understood as that the communication apparatus 70 is the first node itself or a component, a chip, an integrated circuit, or the like inside the first node.

In a possible implementation, the first node is a master node of the two second nodes corresponding to the direct link.

In a possible implementation, the communication link includes a first communication link or a first communication link group; and the first configuration information includes one or more of the following: an identifier of the first communication link; an identifier of the first communication link group; a node identifier; type information of the first communication link; type information of a communication link in the first communication link group; first time domain resource information; or frequency hopping channel indication information. The first communication link is a communication link between two second nodes in the at least two second nodes, the first communication link group includes a plurality of communication links between the at least two second nodes, the node identifier is used to identify at least one node in the at least two second nodes, the first time domain resource information indicates a time domain resource of the communication link, and the frequency hopping channel indication information indicates an available frequency hopping channel of the communication link.

In a possible implementation, the time domain resource of the communication link includes at least one transmission opportunity group, and the first time domain resource information includes one or more of the following: period information of the transmission opportunity group; first time length information; or information about a first start location. All of the at least one transmission opportunity group are continuous in time domain, the first time length information includes information indicating a time domain length of a first transmission opportunity group in the at least one transmission opportunity group, the information about the first start location includes information indicating a time domain start location of a second transmission opportunity group in the at least one transmission opportunity group, and the first transmission opportunity group is the same as or different from the second transmission opportunity group.

In a possible implementation, the transmission opportunity group includes at least one transmission opportunity, the time domain resource of the communication link includes at least two transmission opportunities, and the first time domain resource information further includes one or more of the following: quantity information of the transmission opportunities; second time length information; or information about a second start location. The transmission opportunity is used by the second node to send at least one direct communication message and/or receive at least one direct communication message, and in different transmission opportunities, a same sequence of resources used by the second node to send the at least one direct communication message and/or receive the at least one direct communication message is configured; the quantity information of the transmission opportunities includes a quantity of transmission opportunities in a third transmission opportunity group in the at least one transmission opportunity group; and the second time length information includes a time domain length of a first transmission opportunity of the at least one transmission opportunity, the information about the second start location includes a time domain start location of sending or receiving a direct communication message in a second transmission opportunity of the at least one transmission opportunity, and the first transmission opportunity is the same as or different from the second transmission opportunity.

In a possible implementation, the sending module 701 is further configured to send a first message, where the first message indicates that a fourth transmission opportunity group is used for the communication link, and the fourth transmission opportunity group is included in the time domain resource of the communication link.

In a possible implementation, the sending module 701 is specifically configured to: start to send the first message at a time domain start location of the fourth transmission opportunity group, or send the first message in a time domain resource that is before the fourth transmission opportunity group and that is adjacent to the fourth transmission opportunity group.

In a possible implementation, the sending module 701 is further configured to send a first message, where the first message indicates that the third transmission opportunity is used for the communication link, and the third transmission opportunity is included in the time domain resource of the communication link.

In a possible implementation, the sending module 701 is specifically configured to: start to send the first message at a time domain start location of the third transmission opportunity, or send the first message in a time domain resource that is before the third transmission opportunity and that is adjacent to the third transmission opportunity.

In a possible implementation, the first message is further used to synchronize the at least two second nodes.

In a possible implementation, the communication apparatus 70 further includes a receiving module 702. The receiving module 702 is configured to receive communication link configuration request information, where the communication link configuration request information is used to request to configure the communication link.

In a possible implementation, the communication link configuration request information includes one or more of the following: link type information of the communication link, indication information of the at least two second nodes, period information of the communication link, delay requirement information of the communication link, traffic volume information of the communication link, and resource requirement information of the communication link.

In a possible implementation, the sending module 701 is specifically configured to send the first configuration information to a first slave node on the first frequency hopping channel, where the first slave node is a node in the at least two second nodes, and the first configuration information is used to configure a communication link between the first slave node and a node other than the first slave node in the at least two second nodes. The sending module 701 is further configured to send second configuration information to a second slave node on a second frequency hopping channel, where the second slave node is a second node that is in the at least two second nodes and that is different from the first slave node, and the second configuration information is used to configure a communication link between the second slave node and a node other than the second slave node in the at least two second nodes.

In a possible implementation, the sending module 701 is specifically configured to send the first configuration information to a second node group on the first frequency hopping channel, where the second node group includes the at least two second nodes.

In a possible implementation, the sending module 701 is further configured to send third configuration information, where the third configuration information includes indication information of a third slave node and/or indication information of a first resource, the third slave node is a node in the at least two second nodes, the third slave node is a control node in the at least two second nodes, and the first resource is used to carry control information of the communication link from the control node.

When the communication apparatus 70 is configured to implement the function of the first node, for other functions that can be implemented by the communication apparatus 70, reference may be made to related descriptions of the embodiment shown in FIG. 5 or the embodiment shown in FIG. 6. Details are not described again.

In a simple embodiment, a person skilled in the art can figure out that the communication apparatus 70 may use the form shown in FIG. 4. For example, the processor 401 in FIG. 4 may invoke the computer-executable instructions stored in the memory 403, to enable the communication apparatus 70 to perform the method in the foregoing method embodiments.

For example, functions/implementation processes of the sending module 701 and the receiving module 702 in FIG. 7 may be implemented by the processor 401 in FIG. 4 invoking the computer-executable instructions stored in the memory 403. Alternatively, functions/implementation processes of the sending module 701 and the receiving module 702 in FIG. 7 may be implemented by the communication interface 404 in FIG. 4.

For example, when each functional module is obtained through division in an integrated manner, FIG. 8 is a schematic diagram of a structure of a communication apparatus 80. The communication apparatus 80 includes a receiving module 801 and a processing module 802. The receiving module 802, also known as a receiving unit, is configured to implement a receiving function, and may be, for example, a receiving circuit, a receiver machine, a receiver, or a communication interface. Optionally, the communication apparatus 80 further includes a sending module 803. The sending module 803, also known as a sending unit, is configured to implement a sending function, and may be, for example, a sending circuit, a transmitter machine, a transmitter, or a communication interface.

For example, the communication apparatus 80 is configured to implement a function of the first slave node. The communication apparatus 80 is, for example, the first slave node in the embodiment shown in FIG. 5.

The receiving module 801 is configured to receive first configuration information from a first node on a first frequency hopping channel, where the first configuration information is used to configure a communication link between at least two second nodes, the at least two second nodes include a target node, the communication link includes a direct link between a target node and at least one second node that is in the at least two second nodes and that is different from the target node, and the first node is a master node of the target node.

The processing module 802 is configured to communicate, based on the first configuration information, with the at least one second node that is in the at least two second nodes and that is different from the target node.

In a possible implementation, the first node is a master node of the two second nodes corresponding to the direct link.

In a possible implementation, the communication link includes a first communication link or a first communication link group; and the first configuration information includes one or more of the following: an identifier of the first communication link; an identifier of the first communication link group; a node identifier; type information of the first communication link; type information of a communication link in the first communication link group; first time domain resource information; or frequency hopping channel indication information. The first communication link is a communication link between two second nodes in the at least two second nodes, the first communication link group includes a plurality of communication links between the at least two second nodes, the node identifier is used to identify at least one node in the at least two second nodes, the first time domain resource information indicates a time domain resource of the communication link, and the frequency hopping channel indication information indicates an available frequency hopping channel of the communication link.

In a possible implementation, the time domain resource of the communication link includes at least one transmission opportunity group, and the first time domain resource information includes one or more of the following: period information of the transmission opportunity group; first time length information; or information about a first start location. All of the at least one transmission opportunity group are continuous in time domain, the first time length information includes information indicating a time domain length of a first transmission opportunity group in the at least one transmission opportunity group, the information about the first start location includes information indicating a time domain start location of a second transmission opportunity group in the at least one transmission opportunity group, and the first transmission opportunity group is the same as or different from the second transmission opportunity group.

In a possible implementation, the transmission opportunity group includes at least one transmission opportunity, the time domain resource of the communication link includes at least two transmission opportunities, and the first time domain resource information further includes one or more of the following: quantity information of the transmission opportunities; second time length information; or information about a second start location. The transmission opportunity is used by the second node to send at least one direct communication message and/or receive at least one direct communication message, and in different transmission opportunities, a same sequence of resources used by the second node to send the at least one direct communication message and/or receive the at least one direct communication message is configured; the quantity information of the transmission opportunities includes a quantity of transmission opportunities in a third transmission opportunity group in the at least one transmission opportunity group; and the second time length information includes a time domain length of a first transmission opportunity of the at least one transmission opportunity, the information about the second start location includes a time domain start location of sending or receiving a direct communication message in a second transmission opportunity of the at least one transmission opportunity, and the first transmission opportunity is the same as or different from the second transmission opportunity.

In a possible implementation, the receiving module 801 is further configured to receive a first message, where the first message indicates that a fourth transmission opportunity group is used for the communication link, and the fourth transmission opportunity group is included in the time domain resource of the communication link.

In a possible implementation, the receiving module 801 is specifically configured to: start to receive the first message at a time domain start location of the fourth transmission opportunity group, or receive the first message in a time domain resource that is before the fourth transmission opportunity group and that is adjacent to the fourth transmission opportunity group.

In a possible implementation, the receiving module 801 is further configured to receive a first message, where the first message indicates that a third transmission opportunity is used for the communication link, and the third transmission opportunity is included in the time domain resource of the communication link.

In a possible implementation, the receiving module 801 is specifically configured to: start to receive the first message at a time domain start location of the third transmission opportunity, or receive the first message in a time domain resource that is before the third transmission opportunity and that is adjacent to the third transmission opportunity.

In a possible implementation, the processing module 802 is further configured to synchronize with a node in the at least two second nodes based on the first message.

In a possible implementation, the communication apparatus 80 further includes a sending module 803. The sending module 803 is configured to send communication link configuration request information, where the communication link configuration request information is used to request to configure the communication link.

In a possible implementation, the communication link configuration request information includes one or more of the following: link type information of the communication link, indication information of the at least two second nodes, period information of the communication link, delay requirement information of the communication link, traffic volume information of the communication link, and resource requirement information of the communication link.

In a possible implementation, the receiving module 801 is further configured to receive third configuration information, where the third configuration information includes indication information of a third slave node and/or indication information of a first resource, the third slave node is a node in the at least two second nodes, the third slave node is a control node in the at least two second nodes, and the first resource is used to carry control information of the communication link from the control node.

When the communication apparatus 80 is configured to implement a function of the first slave node, for other functions that can be implemented by the communication apparatus 80, reference may be made to related descriptions of the embodiment shown in FIG. 5. Details are not described again.

In a simple embodiment, a person skilled in the art can figure out that the communication apparatus 80 may use the form shown in FIG. 4. For example, the processor 401 in FIG. 4 may invoke the computer-executable instructions stored in the memory 403, to enable the communication apparatus 80 to perform the method in the foregoing method embodiments.

For example, functions/implementation processes of the receiving module 801, the processing module 802, and the sending module 803 in FIG. 8 may be implemented by the processor 401 in FIG. 4 by invoking the computer-executable instructions stored in the memory 403. Alternatively, a function/an implementation process of the processing module 802 in FIG. 8 may be implemented by the processor 401 in FIG. 4 by invoking the computer-executable instructions stored in the memory 403, and functions/implementation processes of the receiving module 801 and the sending module 803 in FIG. 4 may be implemented by the communication interface 404 in FIG. 4.

For example, when each functional module is obtained through division in an integrated manner, FIG. 9 is a schematic diagram of a structure of a communication apparatus 90. The communication apparatus 90 includes a receiving module 901 and a sending module 902. The receiving module 901, also known as a receiving unit, is configured to implement a receiving function, and may be, for example, a receiving circuit, a receiver machine, a receiver, or a communication interface. The sending module 902, also known as a sending unit, is configured to implement a sending function, and may be, for example, a sending circuit, a transmitter machine, a transmitter, or a communication interface.

For example, the communication apparatus 90 is configured to implement a function of the third slave node. The communication apparatus 90 is, for example, the third slave node in the embodiment shown in FIG. 6.

The receiving module 901 is configured to receive third configuration information, where the third configuration information includes indication information of a third slave node corresponding to the communication apparatus 90 and/or indication information of a first resource. That the third slave node corresponds to the communication apparatus 90 may be understood as that the communication apparatus 90 is the first node itself, or a component, a chip, an integrated circuit, or the like inside the first node.

The sending module 902 is configured to send control information of a communication link to a second node other than the third slave node in the at least two second nodes on the first resource, where the communication link includes a direct link between the at least two second nodes.

In a possible implementation, the communication link includes a first communication link or a first communication link group; and the control information of the communication link includes one or more of the following: an identifier of the first communication link; an identifier of the first communication link group; a node identifier; type information of the first communication link; type information of a communication link in the first communication link group; first time domain resource information; or frequency hopping channel indication information. The first communication link is a communication link between two second nodes in the at least two second nodes, the first communication link group includes a plurality of communication links between the at least two second nodes, the node identifier is used to identify at least one node in the at least two second nodes, the first time domain resource information indicates a time domain resource of the communication link, and the frequency hopping channel indication information indicates an available frequency hopping channel of the communication link.

In a possible implementation, the time domain resource of the communication link includes at least one transmission opportunity group, and the first time domain resource information includes one or more of the following: period information of the transmission opportunity group; first time length information; or information about a first start location. All of the at least one transmission opportunity group are continuous in time domain, the first time length information includes information indicating a time domain length of a first transmission opportunity group in the at least one transmission opportunity group, the information about the first start location includes information indicating a time domain start location of a second transmission opportunity group in the at least one transmission opportunity group, and the first transmission opportunity group is the same as or different from the second transmission opportunity group.

In a possible implementation, the transmission opportunity group includes at least one transmission opportunity, the time domain resource of the communication link includes at least two transmission opportunities, and the first time domain resource information further includes one or more of the following: quantity information of the transmission opportunities; second time length information; or information about a second start location. The transmission opportunity is used by the second node to send at least one direct communication message and/or receive at least one direct communication message, and in different transmission opportunities, a same sequence of resources used by the second node to send the at least one direct communication message and/or receive the at least one direct communication message is configured; the quantity information of the transmission opportunities includes a quantity of transmission opportunities in a third transmission opportunity group in the at least one transmission opportunity group; and the second time length information includes a time domain length of a first transmission opportunity of the at least one transmission opportunity, the information about the second start location includes a time domain start location of sending or receiving a direct communication message in a second transmission opportunity of the at least one transmission opportunity, and the first transmission opportunity is the same as or different from the second transmission opportunity.

When the communication apparatus 90 is configured to implement a function of the third slave node, for other functions that can be implemented by the communication apparatus 90, reference may be made to related descriptions of the embodiment shown in FIG. 6. Details are not described again.

In a simple embodiment, a person skilled in the art can figure out that the communication apparatus 90 may use the form shown in FIG. 4. For example, the processor 401 in FIG. 4 may invoke the computer-executable instructions stored in the memory 403, to enable the communication apparatus 90 to perform the method in the foregoing method embodiments.

For example, functions/implementation processes of the receiving module 901 and the sending module 902 in FIG. 9 may be implemented by the processor 401 in FIG. 4 by invoking the computer-executable instructions stored in the memory 403. Alternatively, functions/implementation processes of the receiving module 901 and the sending module 902 in FIG. 9 may be implemented by the communication interface 404 in FIG. 4.

It should be noted that one or more of the foregoing modules or units may be implemented by software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (system-on-a-chip) or an ASIC, or may be an independent semiconductor chip. In addition to cores used to execute software instructions to perform operations or processing, the processor may further include a necessary hardware accelerator, such as a field programmable gate array (field programmable gate array, FPGA), a PLD (programmable logic device), or a logic circuit implementing a dedicated logical operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, a non-integrated discrete device, or a terminal device, and the hardware may run necessary software or does not depend on software to perform the foregoing method procedures. The terminal device may be a device, for example, an intelligent terminal, an intelligent wearable device, an intelligent manufacturing device, an intelligent transportation device, or an intelligent home device.

Optionally, an embodiment of this application further provides a chip system. The chip system includes at least one processor and an interface. The at least one processor is coupled to a memory through the interface. When the at least one processor executes a computer program or instructions in the memory, the method according to any one of the foregoing method embodiments is performed. In a possible implementation, the chip system further includes a memory. Optionally, the chip system may include a chip, or may include a chip and another discrete component. This is not specifically limited in embodiments of this application.

Optionally, an embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit of the communication apparatus in any one of the foregoing embodiments, for example, a hard disk or memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) that is configured on the communication apparatus. Further, the computer-readable storage medium may include both the internal storage unit and the external storage device of the communication apparatus. The computer-readable storage medium is configured to store the computer program and other programs and data that are required by the communication apparatus. The computer-readable storage medium may be further configured to temporarily store data that has been output or is to be output.

Optionally, an embodiment of this application further provides a computer program product. All or some of the procedures in the foregoing method embodiments may be completed by a computer program instructing related hardware. The program may be stored in the foregoing computer program product. When the program is executed, the procedures of the foregoing method embodiments may be included.

Optionally, an embodiment of this application further provides computer instructions. A related hardware (for example, a computer, a processor, an access network device, a mobility management network element, or a session management network element) may be instructed through the computer instructions to complete all or some of the procedures in the foregoing method embodiments. The program may be stored in the foregoing computer-readable storage medium or in the foregoing computer program product.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, applied to a first node, wherein the method comprises:
sending first configuration information on a first frequency hopping channel, wherein the first configuration information is used to configure a communication link between at least two second nodes, wherein
the communication link comprises a direct link between the at least two second nodes, and the first node is a master node of at least one second node in the two second nodes corresponding to the direct link.

2. The method according to claim 1, wherein the first node is a master node of the two second nodes corresponding to the direct link.

3. The method according to claim 1 or 2, wherein the communication link comprises a first communication link or a first communication link group; and
the first configuration information comprises one or more of the following:
an identifier of the first communication link;
an identifier of the first communication link group;
a node identifier;
type information of the first communication link;
type information of a communication link in the first communication link group;
first time domain resource information; or
frequency hopping channel indication information, wherein
the first communication link is a communication link between two second nodes in the at least two second nodes, the first communication link group comprises a plurality of communication links between the at least two second nodes, the node identifier is used to identify at least one node in the at least two second nodes, the first time domain resource information indicates a time domain resource of the communication link, and the frequency hopping channel indication information indicates an available frequency hopping channel of the communication link.

4. The method according to claim 3, wherein the time domain resource of the communication link comprises at least one transmission opportunity group, and the first time domain resource information comprises one or more of the following:
period information of the transmission opportunity group;
first time length information; or
information about a first start location, wherein
all of the at least one transmission opportunity group are continuous in time domain, the first time length information comprises information indicating a time domain length of a first transmission opportunity group in the at least one transmission opportunity group, the information about the first start location comprises information indicating a time domain start location of a second transmission opportunity group in the at least one transmission opportunity group, and the first transmission opportunity group is the same as or different from the second transmission opportunity group.

5. The method according to claim 4, wherein the transmission opportunity group comprises at least one transmission opportunity, the time domain resource of the communication link comprises at least two transmission opportunities, and the first time domain resource information further comprises one or more of the following:
quantity information of the transmission opportunities;
second time length information; or
information about a second start location, wherein
the transmission opportunity is used by the second node to send at least one direct communication message and/or receive at least one direct communication message, and in different transmission opportunities, a same sequence of resources used by the second node to send the at least one direct communication message and/or receive the at least one direct communication message is configured; the quantity information of the transmission opportunities comprises a quantity of transmission opportunities in a third transmission opportunity group in the at least one transmission opportunity group; and the second time length information comprises a time domain length of a first transmission opportunity in the at least one transmission opportunity, the information about the second start location comprises a time domain start location of sending or receiving a direct communication message in a second transmission opportunity in the at least one transmission opportunity, and the first transmission opportunity is the same as or different from the second transmission opportunity.

6. The method according to any one of claims 1 to 5, wherein the method further comprises:
sending a first message, wherein the first message indicates that a fourth transmission opportunity group is used for the communication link, and the fourth transmission opportunity group is comprised in the time domain resource of the communication link.

7. The method according to claim 6, wherein the sending a first message comprises:
starting sending the first message at a time domain start location of the fourth transmission opportunity group, or sending the first message in a time domain resource that is before the fourth transmission opportunity group and that is adjacent to the fourth transmission opportunity group.

8. The method according to any one of claims 1 to 5, wherein the method further comprises:
sending a first message, wherein the first message indicates that a third transmission opportunity is used for the communication link, and the third transmission opportunity is comprised in the time domain resource of the communication link.

9. The method according to claim 8, wherein the sending a first message comprises:
starting sending the first message at a time domain start location of the third transmission opportunity, or sending the first message in a time domain resource that is before the third transmission opportunity and that is adjacent to the third transmission opportunity.

10. The method according to any one of claims 6 to 9, wherein the first message is further used to synchronize the at least two second nodes.

11. The method according to any one of claims 1 to 10, wherein the method further comprises:
receiving communication link configuration request information, wherein the communication link configuration request information is used to request to configure the communication link.

12. The method according to claim 11, wherein the communication link configuration request information comprises one or more of the following: link type information of the communication link, indication information of the at least two second nodes, period information of the communication link, delay requirement information of the communication link, traffic volume information of the communication link, or resource requirement information of the communication link.

13. The method according to any one of claims 1 to 12, wherein
the sending first configuration information on a first frequency hopping channel comprises:
sending the first configuration information to a first slave node on the first frequency hopping channel, wherein the first slave node is a node in the at least two second nodes, and the first configuration information is used to configure a communication link between the first slave node and a node other than the first slave node in the at least two second nodes; and
the method further comprises:
sending second configuration information to a second slave node on a second frequency hopping channel, wherein the second slave node is a node that is in the at least two second nodes and that is different from the first slave node, and the second configuration information is used to configure a communication link between the second slave node and a node other than the second slave node in the at least two second nodes.

14. The method according to any one of claims 1 to 12, wherein
the sending first configuration information on a first frequency hopping channel comprises:
sending the first configuration information to a second node group on the first frequency hopping channel, wherein the second node group comprises the at least two second nodes.

15. The method according to any one of claims 1 to 14, wherein the method further comprises:
sending third configuration information, wherein the third configuration information comprises indication information of a third slave node and/or indication information of a first resource, the third slave node is a node in the at least two second nodes, the third slave node is a control node in the at least two second nodes, and the first resource is used to carry control information of the communication link from the control node.

16. A communication method, wherein the method comprises:
receiving first configuration information from a first node on a first frequency hopping channel, wherein the first configuration information is used to configure a communication link between at least two second nodes, the at least two nodes comprise a target node, the communication link comprises a direct link between the target node and at least one second node that is in the at least two second nodes and that is different from the target node, and the first node is a master node of the target node; and
communicating, based on the first configuration information, with the at least one second node that is in the at least two second nodes and that is different from the target node.

17. The method according to claim 16, wherein the first node is a master node of the two second nodes corresponding to the direct link.

18. The method according to claim 16 or 17, wherein the communication link comprises a first communication link or a first communication link group; and
the configuration information comprises one or more of the following:
an identifier of the first communication link;
an identifier of the first communication link group;
a node identifier;
type information of the first communication link;
type information of a communication link in the first communication link group;
first time domain resource information; or
frequency hopping channel indication information, wherein
the first communication link is a communication link between two second nodes in the at least two second nodes, the first communication link group comprises a plurality of communication links between the at least two second nodes, the node identifier is used to identify at least one node in the at least two second nodes, the first time domain resource information indicates a time domain resource of the communication link, and the frequency hopping channel indication information indicates an available frequency hopping channel of the communication link.

19. The method according to claim 18, wherein the time domain resource of the communication link comprises at least one transmission opportunity group, and the first time domain resource information comprises one or more of the following:
period information of the transmission opportunity group;
first time length information; or
information about a first start location, wherein
all of the at least one transmission opportunity group are continuous in time domain, the first time length information comprises information indicating a time domain length of a first transmission opportunity group in the at least one transmission opportunity group, the information about the first start location comprises information indicating a time domain start location of a second transmission opportunity group in the at least one transmission opportunity group, and the first transmission opportunity group is the same as or different from the second transmission opportunity group.

20. The method according to claim 19, wherein the transmission opportunity group comprises at least one transmission opportunity, the time domain resource of the communication link comprises at least two transmission opportunities, and the first time domain resource information further comprises one or more of the following:
quantity information of the transmission opportunities;
second time length information; or
information about a second start location, wherein
the transmission opportunity is used by the second node to send at least one direct communication message and/or receive at least one direct communication message, and in different transmission opportunities, a same sequence of resources used by the second node to send the at least one direct communication message and/or receive the at least one direct communication message is configured; the quantity information of the transmission opportunities comprises a quantity of transmission opportunities in a third transmission opportunity group in the at least one transmission opportunity group; and the second time length information comprises a time domain length of a first transmission opportunity in the at least one transmission opportunity, the information about the second start location comprises a time domain start location of sending or receiving a direct communication message in a second transmission opportunity in the at least one transmission opportunity, and the first transmission opportunity is the same as or different from the second transmission opportunity.

21. The method according to any one of claims 16 to 20, wherein the method further comprises:
receiving a first message, wherein the first message indicates that a fourth transmission opportunity group is used for the communication link, and the fourth transmission opportunity group is comprised in the time domain resource of the communication link.

22. The method according to claim 21, wherein the receiving a first message comprises:
starting receiving the first message at a time domain start location of the fourth transmission opportunity group, or receiving the first message in a time domain resource that is before the fourth transmission opportunity group and that is adjacent to the fourth transmission opportunity group.

23. The method according to any one of claims 16 to 20, wherein the method further comprises:
receiving a first message, wherein the first message indicates that a third transmission opportunity is used for the communication link, and the third transmission opportunity is comprised in the time domain resource of the communication link.

24. The method according to claim 23, wherein the receiving a first message comprises:
starting receiving the first message at a time domain start location of the third transmission opportunity, or receiving the first message in a time domain resource that is before the third transmission opportunity and that is adjacent to the third transmission opportunity.

25. The method according to any one of claims 21 to 24, wherein the method further comprises:
synchronizing with a node in the at least two second nodes based on the first message.

26. The method according to any one of claims 16 to 25, wherein the method further comprises:
sending communication link configuration request information, wherein the communication link configuration request information is used to request to configure the communication link.

27. The method according to claim 26, wherein the communication link configuration request information comprises one or more of the following: link type information of the communication link, indication information of the at least two second nodes, period information of the communication link, delay requirement information of the communication link, traffic volume information of the communication link, or resource requirement information of the communication link.

28. The method according to any one of claims 16 to 27, wherein the method further comprises:
receiving third configuration information, wherein the third configuration information comprises indication information of a third slave node and/or indication information of a first resource, the third slave node is a node in the at least two second nodes, the third slave node is a control node in the at least two second nodes, and the first resource is used to carry control information of the communication link from the control node.

29. A communication method, wherein the method comprises:
receiving third configuration information, wherein the third configuration information comprises indication information of a third slave node and/or indication information of a first resource; and
sending, on the first resource, control information of a communication link to a second node other than the third slave node in at least two second nodes, wherein the communication link comprises a direct link between the at least two second nodes.

30. The method according to claim 29, wherein the communication link comprises a first communication link or a first communication link group; and
the control information of the communication link comprises one or more of the following:
an identifier of the first communication link;
an identifier of the first communication link group;
a node identifier;
type information of the first communication link;
type information of a communication link in the first communication link group;
first time domain resource information; or
frequency hopping channel indication information, wherein
the first communication link is a communication link between two second nodes in the at least two second nodes, the first communication link group comprises a plurality of communication links between the at least two second nodes, the node identifier is used to identify at least one node in the at least two second nodes, the first time domain resource information indicates a time domain resource of the communication link, and the frequency hopping channel indication information indicates an available frequency hopping channel of the communication link.

31. The method according to claim 30, wherein the time domain resource of the communication link comprises at least one transmission opportunity group, and the first time domain resource information comprises one or more of the following:
period information of the transmission opportunity group;
first time length information; or
information about a first start location, wherein
all of the at least one transmission opportunity group are continuous in time domain, the first time length information comprises information indicating a time domain length of a first transmission opportunity group in the at least one transmission opportunity group, the information about the first start location comprises information indicating a time domain start location of a second transmission opportunity group in the at least one transmission opportunity group, and the first transmission opportunity group is the same as or different from the second transmission opportunity group.

32. The method according to claim 31, wherein the transmission opportunity group comprises at least one transmission opportunity, the time domain resource of the communication link comprises at least two transmission opportunities, and the first time domain resource information further comprises one or more of the following:
quantity information of the transmission opportunities;
second time length information; or
information about a second start location, wherein
the transmission opportunity is used by the second node to send at least one direct communication message and/or receive at least one direct communication message, and in different transmission opportunities, a same sequence of resources used by the second node to send the at least one direct communication message and/or receive the at least one direct communication message is configured; the quantity information of the transmission opportunities comprises a quantity of transmission opportunities in a third transmission opportunity group in the at least one transmission opportunity group; and the second time length information comprises a time domain length of a first transmission opportunity in the at least one transmission opportunity, the information about the second start location comprises a time domain start location of sending or receiving a direct communication message in a second transmission opportunity in the at least one transmission opportunity, and the first transmission opportunity is the same as or different from the second transmission opportunity.

33. A communication apparatus, wherein the communication apparatus comprises a sending module, wherein
the sending module is configured to send first configuration information on a first frequency hopping channel, wherein the first configuration information is used to configure a communication link between at least two second nodes; and
the communication link comprises a direct link between the at least two second nodes, and a first node corresponding to the communication apparatus is a master node of at least one second node in the two second nodes corresponding to the direct link.

34. A communication apparatus, wherein the communication apparatus comprises a receiving module and a processing module, wherein
the receiving module is configured to receive first configuration information from a first node on a first frequency hopping channel, wherein the first configuration information is used to configure a communication link between at least two second nodes, the at least two nodes comprise a target node, the communication link comprises a direct link between the target node and at least one second node that is in the at least two second nodes and that is different from the target node, and the first node is a master node of the target node; and
the processing module is configured to communicate, based on the first configuration information, with the at least one second node that is in the at least two second nodes and that is different from the target node.

35. A communication apparatus, wherein the communication apparatus comprises a receiving module and a sending module, wherein
the receiving module is configured to receive third configuration information, wherein the third configuration information comprises indication information of a third slave node corresponding to the communication apparatus and/or indication information of a first resource; and
the sending module is configured to send, on the first resource, control information of a communication link to a second node other than the third node in at least two second nodes, wherein the communication link comprises a direct link between the at least two second nodes.

36. A communication apparatus, comprising at least one processor and an interface circuit, wherein the interface circuit is configured to receive a computer program or instructions and transmit the computer program or instructions to the at least one processor, and the at least one processor is configured to execute the computer program or the instructions, so that the apparatus performs the method according to any one of claims 1 to 15, performs the method according to any one of claims 16 to 28, or performs the method according to any one of claims 29 to 32.

37. A computer-readable storage medium, storing a computer program or instructions, wherein when the computer program or instructions are executed, a computer is enabled to perform the method according to any one of claims 1 to 15, the method according to any one of claims 16 to 28, or the method according to any one of claims 29 to 32.

38. A terminal device, comprising a communication apparatus configured to perform the method according to any one of claims 1 to 15, comprising a communication apparatus configured to perform the method according to any one of claims 16 to 28, or comprising a communication apparatus configured to perform the method according to any one of claims 29 to 32.
